# EUROPEAN PATENT SPECIFICATION

(11) **EP 4 708 829 B1**
(45) Date of publication and mention of the grant of the patent: **09.12.2026**
(21) Application number: 24823545.9
(22) Date of filing: 16.04.2024
(51) Int. Cl.: H04M 1/02, H01Q 21/28, H01Q 9/42, H01Q 1/44, G06F 1/16, H02K 7/116, H01Q 1/24, F16H 19/04, H01Q 1/38, H01Q 1/48

(54) **ELECTRONIC DEVICE COMPRISING ANTENNA AND RACK GEAR**
ELEKTRONISCHE VORRICHTUNG MIT ANTENNE UND ZAHNSTANGENGETRIEBE
DISPOSITIF ÉLECTRONIQUE COMPRENANT UNE ANTENNE ET UN ENGRENAGE À CRÉMAILLÈRE

(30) Priority: 13.06.2023 KR 20230075820; 18.08.2023 KR 20230108607
(43) Date of publication of application: 11.03.2026
(73) Proprietor: Samsung Electronics Co., Ltd., Suwon-si, Gyeonggi-do 16677 (KR)
(72) Inventor: JO, Kyunghwan, Suwon-si Gyeonggi-do 16677 (KR); KIM, Moonyung, Suwon-si Gyeonggi-do 16677 (KR); LEE, Donghyeok, Suwon-si Gyeonggi-do 16677 (KR); KO, Byungkuk, Suwon-si Gyeonggi-do 16677 (KR); LEE, Soyoung, Suwon-si Gyeonggi-do 16677 (KR); JANG, Seokmin, Suwon-si Gyeonggi-do 16677 (KR)
(74) Representative: Gulde & Partner
(86) International application number: PCT/KR2024/005090
(87) International publication number: WO 2024/258024

(56) References cited:
- WO-A1-2022/181856
- WO-A1-2022/231040
- CN-A- 113 849 036
- KR-A- 20190 143 029
- KR-A- 20220 138 133

## Description

### [Technical Field]

The present disclosure relates to an electronic device including an antenna and a rack gear.

### [Background Art]

An electronic device including a large-screen display may improve user usability. As demand for a highly portable electronic device increases, the electronic device may include a deformable display. The deformable display may be foldably deformable or rollably deformable. Deformation of the display may be achieved through an operation of housing parts that are movable coupled. The electronic device may include a rack gear for the operation of the housing parts.

The electronic device may communicate with an external electronic device using a portion of a housing. For example, the housing may include a plurality of conductive portions that are disconnected from each other. The electronic device may communicate with the external electronic device using at least one of the plurality of disconnected conductive portions that are disconnected from each other. WO2022181856 discloses an electronic device including first and second housings movably coupled to each other, a rack gear disposed in the housing and parallel to a moving direction of the first housing part or the second housing part, a conductive portion formed along a portion of at least one lateral side of the second housing part, and wireless communication circuitry configured to communicate with an external electronic device using the conductive portion.

The above-described information may be provided as related art for the purpose of helping the understanding of the present disclosure. No claim or determination is raised as to whether any of the above-described content may be applied as prior art related to the present disclosure.

### [Disclosure]

### [Technical Solution]

The invention is defined in the appended claims. An electronic device is provided. The electronic device may comprise a housing including a first housing part and a second housing part movably coupled to each other. The electronic device may comprise a rack gear disposed in the housing and parallel to a moving direction of the first housing part or the second housing part. The electronic device may comprise a conductive portion formed along a portion of at least one lateral side of the second housing part. The electronic device may comprise wireless communication circuitry configured to communicate with an external electronic device using the conductive portion. The electronic device may comprise a first substrate electrically connected to the conductive portion. At least a portion of the conductive portion, in the at least one lateral side, may face the rack gear. At least a portion of the conductive portion may be disposed at a position corresponding to a first state in which a distance between the rack gear and the conductive portion is minimum or a position corresponding to a second state in which the distance is maximum, in accordance with the movement of the first housing part or the second housing part. **The** rack gear may include at least one of a first portion or a second portion. **The** first portion may be electrically connected to a ground portion of the first substrate in the first state. **The** second portion may be in contact with the conductive portion in the first state.

### [Description of the Drawings]

FIG. 1 is a block diagram of an electronic device in a network environment according to an embodiment.
FIG. 2A is a top plan view of an electronic device according to an embodiment in a first state.
FIG. 2B is a bottom view of an electronic device according to an embodiment in a first state.
FIG. 2C is a top plan view of an electronic device according to an embodiment in a second state.
FIG. 2D is a bottom view of an electronic device according to an embodiment in a second state.
FIGS. 3A and 3B are exploded perspective views of an electronic device according to an embodiment.
FIG. 4A is a cross-sectional view of an electronic device according to an embodiment in a first state.
FIG. 4B is a cross-sectional view of an electronic device according to an embodiment in a second state.
FIG. 5A illustrates the inside of an electronic device according to an embodiment in a first state.
FIG. 5B illustrates the inside of an electronic device according to an embodiment in a second state.
FIG. 5C is an exploded perspective view of an electronic device according to an embodiment.
FIG. 6A is a perspective view of an electronic device according to an embodiment in a first state.
FIG. 6B illustrates a first lateral side of an electronic device according to an embodiment in a first state.
FIG. 6C illustrates a first lateral side of an electronic device according to an embodiment in a first state.
FIGS. 7A and 7B illustrate an example of a cross-sectional view of an electronic device cut along line C-C' of FIG. 5A.
FIG. 8A is a graph indicating efficiency of a first antenna in a first state.
FIG. 8B is a graph indicating efficiency of a second antenna in a first state.
FIG. 9A illustrates an example of a cross-sectional view of an electronic device cut along line C-C' of FIG. 5A.
FIGS. 9B and 9C illustrate an example of a second portion of a rack gear.
FIG. 10 is a graph indicating efficiency of a first antenna in a first state.
FIG. 11 illustrates an example of a cross-sectional view of an electronic device cut along line C-C' of FIG. 5A.
FIG. 12 illustrates an example of a cross-sectional view of an electronic device cut along line C-C' of FIG. 5A.
FIG. 13 is a graph indicating efficiency of a first antenna according to a structure of a rack gear in a first state.
FIG. 14 is a graph indicating efficiency of a second antenna in a first state.

### [Mode for Invention]

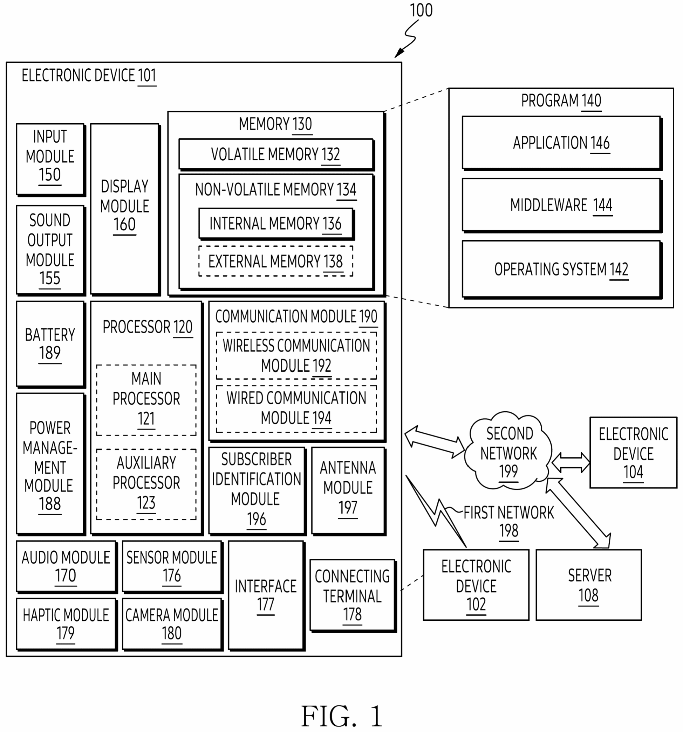

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

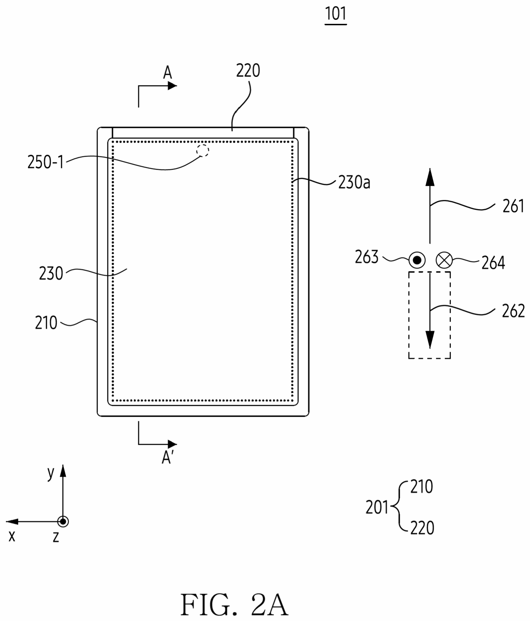

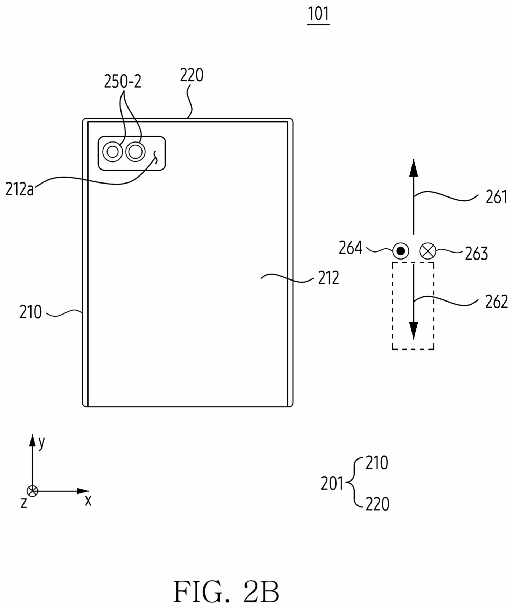

For example, the display of the display module 160 may be flexible. For example, the display may include a display area that is exposed outside a housing of the electronic device 101, which provides at least a portion of an outer surface of the electronic device 101. For example, since the display has flexibility, at least a portion of the display may be rollable into the housing or slidable into the housing. For example, a size of the display area may be changed according to a size of the at least one portion of the display that is rolled into the housing or slid into the housing. For example, the electronic device 101 including the display may be in a plurality of states, including a first state providing the display area has a first size and a second state providing the display area has a second size different from the first size. For example, the first state may be exemplified through descriptions of FIGS. 2A and FIG. 2B.

FIG. 2A is a top plan view of an electronic device according to an embodiment in a first state.

Referring to FIG. 2A, an electronic device 101 may include a housing 201 and a display 230. For example, the housing 201 may include a first housing part 210 and a second housing part 220. For example, the second housing part 220 may be movable with respect to the first housing part 210 in a first direction 261 parallel to an y-axis or in a second direction 262 that is parallel to the y-axis and opposite to the first direction 261.

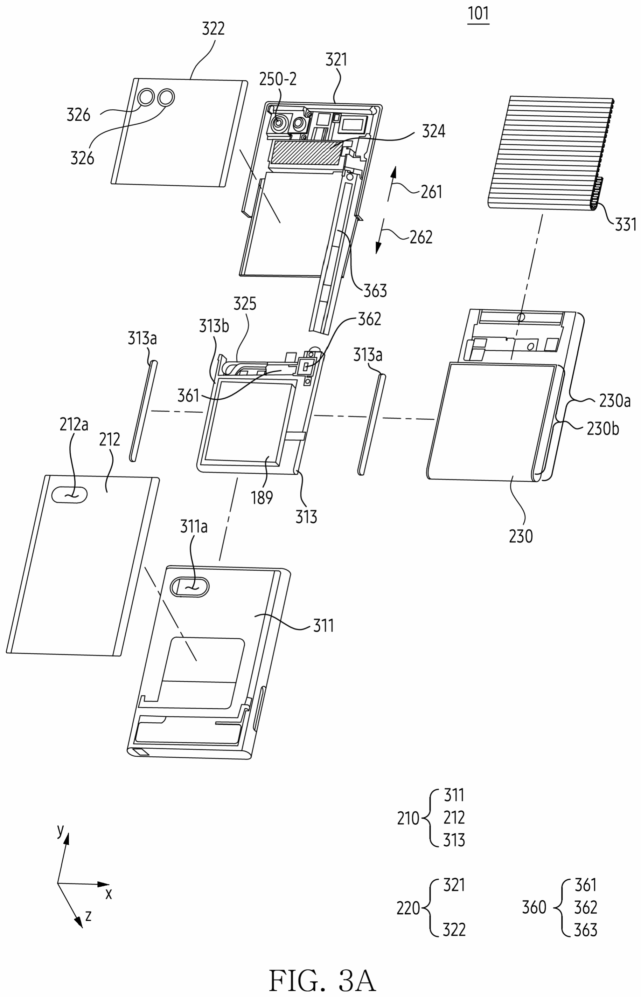

In the present disclosure, an operation in which the second housing part 220 is moved with respect to the first housing part 210, or an operation in which the first housing part 210 is moved with respect to the second housing part 220, may be described by an operation of a driving unit (e.g., a driving unit 360 of FIG. 3A). The operations should be understood as the housing 201 being deformed in accordance with a change in a relative positional relationship between the first housing part 210 and the second housing part 220. For example, the housing 201 may have a structure in which an overall size of the housing 201 may be changed in accordance with the change in the relative positional relationship between the first housing part 210 and the second housing part 220. The relative positional relationship between the first housing part 210 and the second housing part 220 may be changed by an operation of the driving unit 360, which will be described later. For convenience of explanation, it is described as the first housing part 210 or the second housing part 220 being moved, but it is not necessarily limited to the first housing part 210 or the second housing part 220 being moved, and should be understood as the relative positional relationship between the first housing part 210 and the second housing part 220 being changed.

For example, the electronic device 101 may be in the first state. For example, in the first state, the second housing part 220 may be movable with respect to the first housing part 210 in the first direction 261 among the second direction 262 and the first direction 261. For example, in the first state, the second housing part 220 may not be movable with respect to the first housing part 210 in the second direction 262.

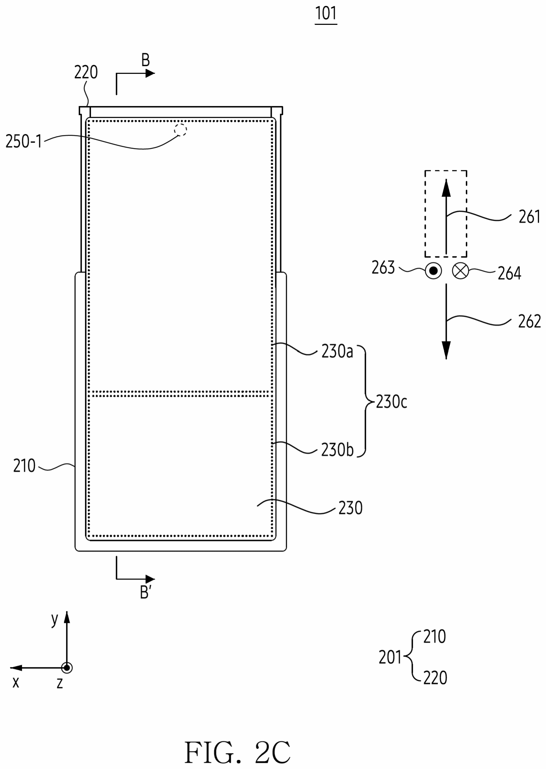

For example, in the first state, the display 230 may provide the display area having the smallest size. In the first state, the display area may correspond to a first display area 230a. Although not illustrated in FIG. 2A, in the first state, a second display area (e.g., a second display area 230b of FIG. 2C) of the display 230, which is different from the first display area 230a that is the display area, may be included in the first housing part 210. For example, in the first state, the area (e.g., the second display area 230b of FIG. 2C) may be covered by the first housing part 210. In the first state, the area may be rollable into the first housing part 210. In the first state, the first display area 230a may include a planar portion. However, it is not limited thereto. The first display area 230a may include a curved portion extending from the planar portion and positioned in an edge portion, in the first state.

For example, the first state may be referred to as a slide-in state or a closed state in terms of at least a portion of the second housing part 220 being positioned in the first housing part 210. For example, the first state may be referred to as a reduced state in terms of providing the display area having the smallest size. However, it is not limited thereto.

For example, the second housing part 220 may include a first image sensor 250-1 in a camera module 180, which is exposed through a portion of the first display area 230a and faces a third direction 263 parallel to a z-axis. Although not illustrated in FIG. 2A, the second housing part 220 may include one or more second image sensors in the camera module 180, which are exposed through a portion of the second housing part 220 and face a fourth direction 264 that is parallel to the z-axis and opposite to the third direction 263. The one or more second image sensors may be exemplified through description of FIG. 2B.

FIG. 2B is a bottom view of an electronic device according to an embodiment in a first state.

Referring to FIG. 2B, in the first state, one or more second image sensors 250-2 disposed in the second housing part 220 may be positioned in a structure disposed in the first housing part 210 for the one or more second image sensors 250-2. Light from outside the electronic device 101 may be received by the one or more second image sensors 250-2 through the structure in the first state. Since the one or more second image sensors 250-2 are positioned in the structure in the first state, the one or more second image sensors 250-2 may be exposed through the structure in the first state. The structure may be implemented in various ways. The structure may be an opening or a notch. The structure may be an opening 212a in a first plate 212 of the first housing part 210 that surrounds at least a portion of the second housing part 220. However, it is not limited thereto. In the first state, the one or more second image sensors 250-2 included in the second housing part 220 may be covered by the first plate 212 of the first housing part 210.

For example, the first state may be changed to the second state. The first state (or the second state) may be changed to the second state (or the first state) through intermediate states between the first state and the second state.

For example, the first state (or the second state) may be changed to the second state (or the first state) based on a user input. The first state (or the second state) may be changed to the second state (or the first state) in response to a user input to a physical button exposed through a portion of the first housing part 210 or a portion of the second housing part 220. The first state (or the second state) may be changed to the second state (or the first state) in response to a touch input to an executable object displayed in the display area. The first state (or the second state) may be changed to the second state (or the first state) in response to a touch input having a contact point on the display area and a pressing intensity equal to or greater than a reference intensity. The first state (or the second state) may be changed to the second state (or the first state) in response to a voice input received through a microphone of the electronic device 101. The first state (or the second state) may be changed to the second state (or the first state) in response to an external force applied to the first housing part 210 and/or the second housing part 220 to move the second housing part 220 with respect to the first housing part 210. The first state (or the second state) may be changed to the second state (or the first state) in response to a user input identified from an external electronic device (e.g., earbuds or a smart watch) connected to the electronic device 101. However, it is not limited thereto.

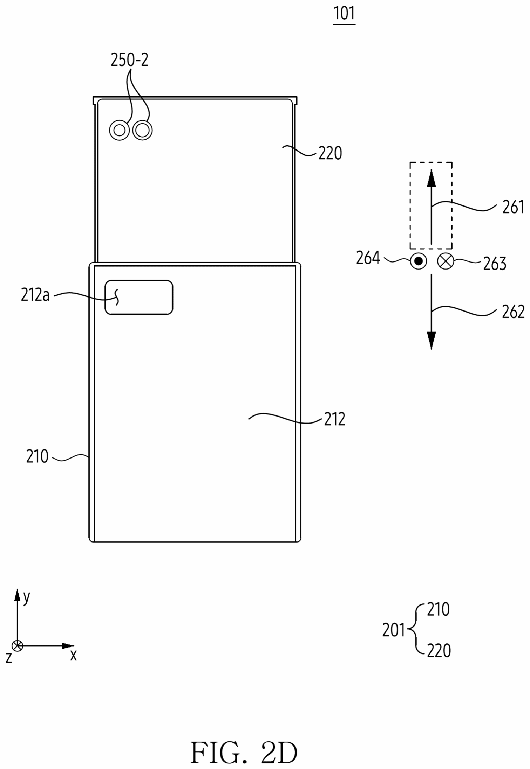

The second state may be exemplified through descriptions of FIGS. 2C and 2D.

FIG. 2C is a top plan view of an electronic device according to an embodiment in a second state.

Referring to FIG. 2C, the electronic device 101 may be in the second state. For example, in the second state, the second housing part 220 may be movable with respect to the first housing part 210 in the second direction 262 among the first direction 261 and the second direction 262. For example, in the second state, the second housing part 220 may not be movable with respect to the first housing part 210 in the first direction 261.

For example, in the second state, the display 230 may provide the display area having the largest size. In the second state, the display area may correspond to an area 230c including the first display area 230a and the second display area 230b. The second display area 230b, which was included in the first housing part 210 in the first state, may be exposed in the second state. For example, in the second state, the first display area 230a may include a planar portion. However, it is not limited thereto. For example, the first display area 230a may also include a curved portion extending from the planar portion and positioned in an edge portion. For example, in the second state, the second display area 230b may include a planar portion among a curved portion and a planar portion, unlike the first display area 230a in the first state. However, it is not limited thereto. For example, the second display area 230b may also include a curved portion extending from the planar portion of the second display area 230b and positioned in an edge portion.

For example, the second state may be referred to as a slide-out state or an open state in terms of at least a portion of the second housing part 220, which is disposed outside the first housing part 210, being extended with respect to the first state. The second state may be referred to as an expanded state in terms of providing the display area having the largest size. However, it is not limited thereto.

For example, the first image sensor 250-1 facing the third direction 263 may be moved together with the first display area 230a in accordance with movement of the second housing part 220 in the first direction 261 when a state of the electronic device 101 is changed from the first state to the second state. Although not illustrated in FIG. 2C, the one or more second image sensors 250-2 facing the fourth direction 264 may be moved in accordance with the movement of the second housing part 220 in the first direction 261 when the state of the electronic device 101 is changed from the first state to the second state. A relative positional relationship between the one or more second image sensors 250-2 and the structure exemplified through description of FIG. 2D may be changed in accordance with the movement of the one or more second image sensors 250-2. The change in the relative positional relationship may be exemplified through FIG. 2D.

FIG. 2D is a bottom view of an electronic device according to an embodiment in a second state.

Referring to FIG. 2D, in the second state, the one or more second image sensors 250-2 may be positioned outside the structure. The structure may include the opening 212a. In the second state, the one or more second image sensors 250-2 may be positioned outside the opening 212a in the first plate 212. The one or more second image sensors 250-2 may be exposed through the opening 212a in the first state. Since the one or more second image sensors 250-2 are positioned outside the first housing part 210 in the second state, the one or more second image sensors 250-2 may be exposed in the second state. Since the one or more second image sensors 250-2 are positioned outside the structure in the second state, the relative positional relationship in the second state may be different from the relative positional relationship in the first state.

For example, when the electronic device 101 does not include the structure such as the opening 212a, the one or more second image sensors 250-2 may be exposed in the second state among the first state and the second state.

Although not illustrated in FIG. 2A, FIG. 2B, FIG. 2C, and FIG. 2D, the electronic device 101 may be in an intermediate state between the first state and the second state. For example, the size of the display area in the intermediate state may be larger than the size of the display area in the first state and smaller than the size of the display area in the second state. For example, the display area in the intermediate state may correspond to an area including the first display area 230a and a portion of the second display area 230b. In the intermediate state, the portion of the second display area 230b may be exposed, and another portion (or a remaining portion) of the second display area 230b may be covered by the first housing part 210 or may be rollable into the first housing part 210. However, it is not limited thereto.

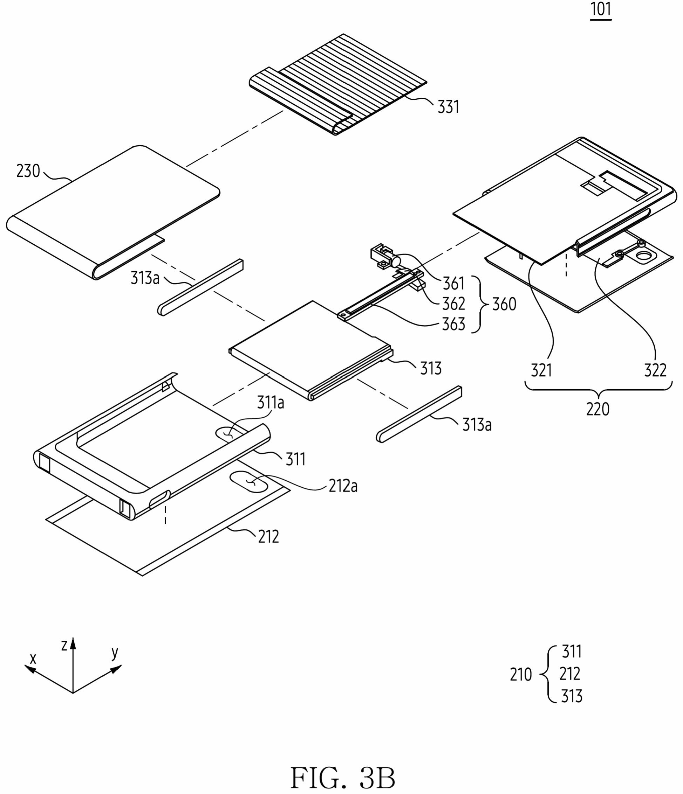

Referring again to FIG. 1, the electronic device 101 may include structures for moving a second housing (e.g., the second housing part 220 of FIG. 2A) of the electronic device 101 with respect to a first housing (e.g., the first housing part 210 of FIG. 2A) of the electronic device 101. The structures may be exemplified through descriptions of FIGS. 3A and 3B.

FIGS. 3A and 3B are exploded perspective views of an electronic device according to an embodiment.

Referring to FIGS. 3A and 3B, an electronic device 101 may include a first housing part 210, a second housing part 220, a display 230, and a driving unit 360.

For example, the first housing part 210 may include a first cover 311, a first plate 212, and a frame 313.

For example, the first cover 311 may at least partially form a lateral side portion of an outer surface of the electronic device 101. The first cover 311 may include an opening 311a for one or more second image sensors 250-2. The first cover 311 may include a surface that supports the first plate 212. The first cover 311 may be coupled to the first plate 212. The first cover 311 may include the frame 313. The first cover 311 may be coupled to the frame 313.

For example, the first plate 212 may at least partially form a rear portion of the outer surface. The first plate 212 may include an opening 212a for the one or more second image sensors 250-2. The first plate 212 may be disposed on the surface of the first cover 311. The opening 212a may be aligned with the opening 311a.

For example, the frame 313 may be at least partially surrounded by the first cover 311.

For example, the frame 313 may be at least partially surrounded by the display 230. Although the frame 313 is at least partially surrounded by the display 230, a position of the frame 313 may be maintained independently of movement of the display 230. The frame 313 may be arranged in relation to at least some of components of the display 230. The frame 313 may include rails 313a that provide (or guide) a path of movement of at least one component of the display 230.

For example, the frame 313 may be coupled to at least one component of the electronic device 101. The frame 313 may support a battery 189. The frame 313 may be coupled to an end of a flexible printed circuit board (FPCB) 325 on a surface on the frame 313. Although not explicitly illustrated in FIGS. 3A and 3B, another end of the FPCB 325 may be connected to a PCB 324 through at least one connector. For example, the PCB 324 may be electrically connected to another PCB (not illustrated in FIGS. 3A and 3B) that supplies power to a motor 361, through the FPCB 325.

For example, the frame 313 may be coupled to at least one structure of the electronic device 101 for a plurality of states including the first state and the second state. The motor 361 of the driving unit 360 may be fixed to the frame 313.

For example, the second housing part 220 may include a second cover 321 and a second plate 322.

For example, the second cover 321 may be at least partially surrounded by the display 230. For example, the second cover 321 may be coupled to at least a portion of a first display area 230a of the display 230 that surrounds the second cover 321.

For example, the second cover 321 may be coupled to at least one component of the electronic device 101. For example, the second cover 321 may be coupled to the printed circuit board (PCB) 324 on which components of the electronic device 101 are disposed. For example, a processor (e.g., the processor 120 of FIG. 1) may be disposed on the PCB 324. For example, the second cover 321 may support the one or more second image sensors 250-2.

For example, the second cover 321 may be coupled to the second plate 322.

For example, the second plate 322 may be coupled to the second cover 321 to protect at least one component of the electronic device 101 coupled in the second cover 321 and/or at least one structure of the electronic device 101 coupled in the second cover 321. The second plate 322 may include a structure for the at least one component. The second plate 322 may include one or more openings 326 for the one or more second image sensors 250-2. The one or more openings 326 may be aligned with the one or more second image sensors 250-2 disposed on the second cover 321. A size of each of the one or more openings 326 may correspond to a size of each lenses included in the one or more second image sensors 250-2.

For example, the electronic device 101 may include a support member 331 for supporting at least a portion of the display 230. For example, the support member 331 may include a plurality of bars. The plurality of bars may be coupled to each other. The support member 331 may support a second display area 230b of the display 230.

For example, the driving unit 360 may include the motor 361, a pinion gear 362, and a rack gear 363.

For example, the motor 361 may operate based on power from the battery 189. The power may be supplied to the motor 361 in response to the user input.

For example, the pinion gear 362 may be coupled to the motor 361 through a shaft. The pinion gear 362 may be rotated based on the operation of the motor 361 transmitted through the shaft.

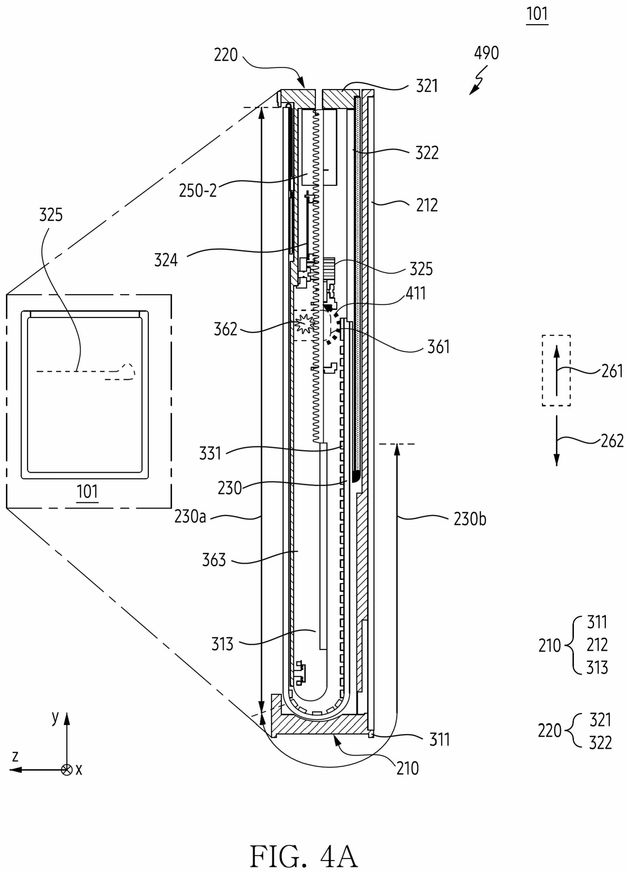

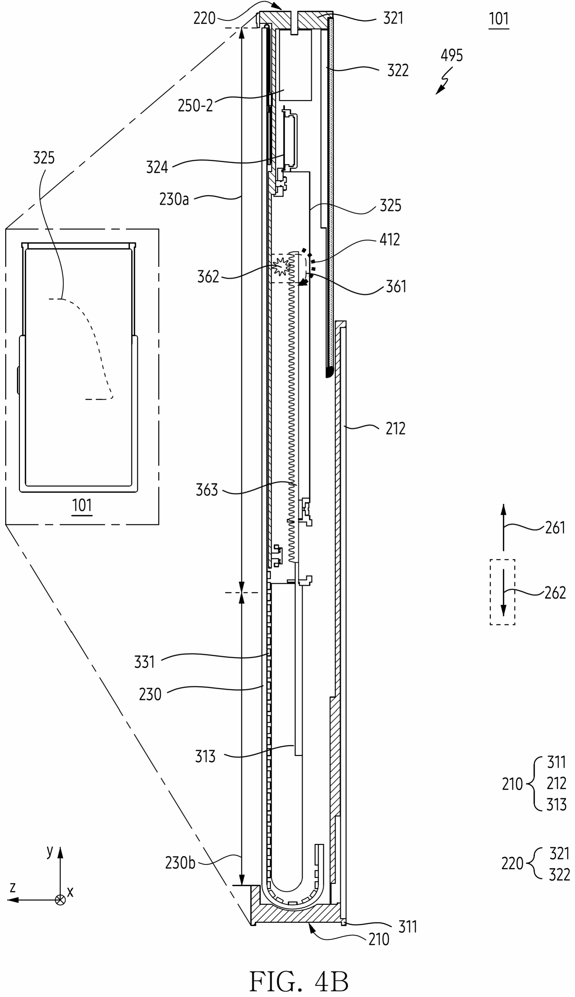

For example, the rack gear 363 may be arranged in relation to the pinion gear 362. Teeth of the rack gear 363 may engage with teeth of the pinion gear 362. The rack gear 363 may be moved in a first direction 261 or a second direction 262 in accordance with the rotation of the pinion gear 362. The rack gear 363 may be coupled to the first housing part 210 or the second housing part 220. The second housing part 220 may be moved in the first direction 261 and the second direction 262 by the rack gear 363, which is moved in accordance with the rotation of the pinion gear 362 resulting from the operation of the motor 361. The first state of the electronic device 101 may be changed to a state (e.g., the one or more intermediate states or the second state) different from the first state through the movement of the second housing part 220 in the first direction 261. The second state of the electronic device 101 may be changed to a state (e.g., the one or more intermediate states or the first state) different from the second state through the movement of the second housing part 220 in the second direction 262. The change from the first state to the second state by the driving unit 360 and the change from the second state to the first state by the driving unit 360 may be exemplified through FIGS. 4A and 4B.

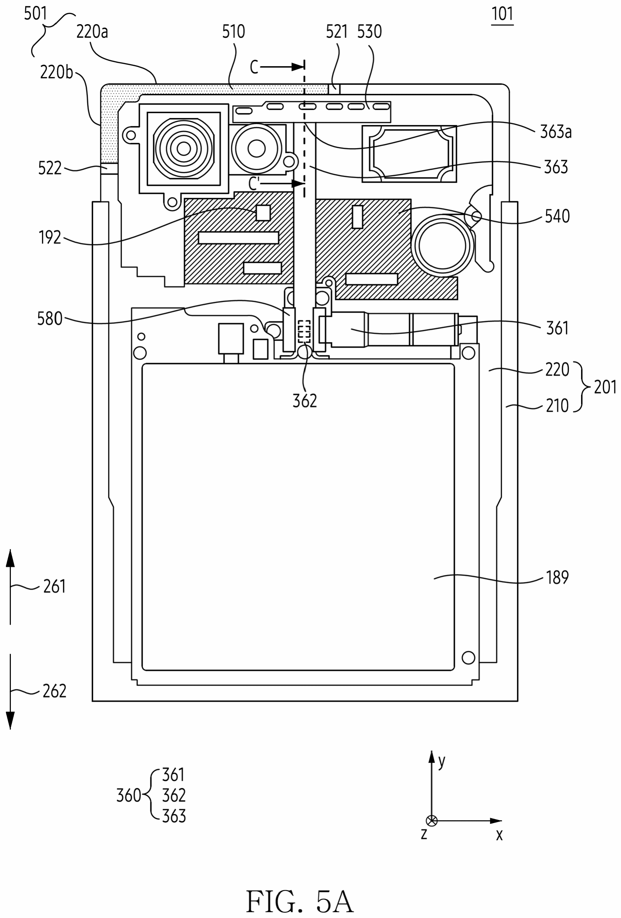

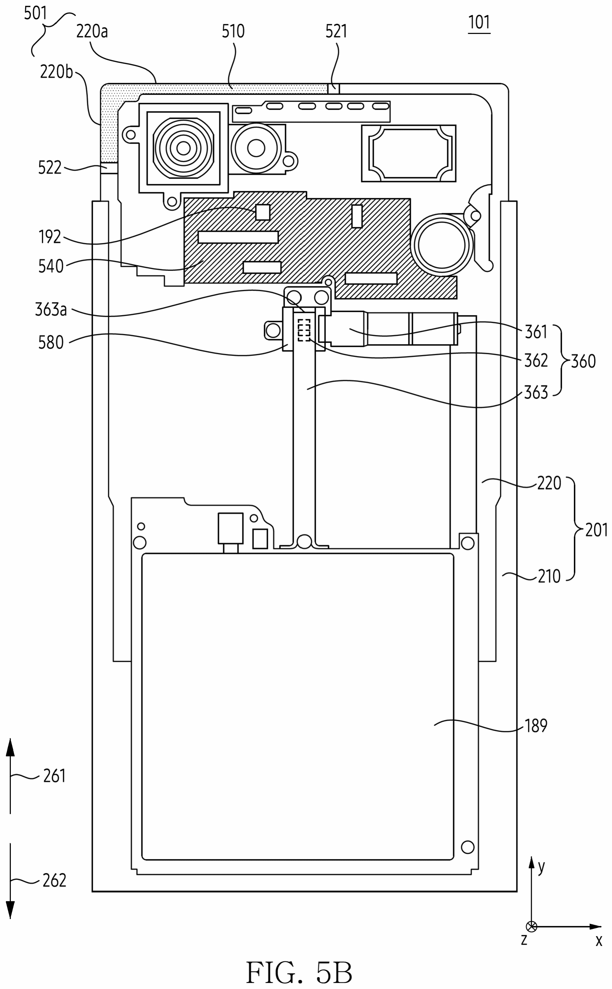

A structure of the electronic device 101 according to an embodiment of the present disclosure is not limited to the structure illustrated in FIG. 3A. For example, in the embodiment illustrated in FIG. 3A, the rack gear 363 is illustrated as being coupled to the second housing part 220, and the motor 361 and the pinion gear 362 are illustrated as being coupled to the first housing part 210, but this is merely illustrative for describing the movement operation of the first housing part 210 or the second housing part 220, and embodiments of the present disclosure are not limited thereto. For example, as illustrated in FIGS. 5A and 5B, the rack gear 363 may be coupled to the first housing part 210, and the motor 361 and the pinion gear 362 may be coupled to the second housing part 220. The motor 361, the pinion gear 362, and the rack gear 363 described through FIGS. 3A and 3B should be understood as illustrative for describing the first state and the second state based on a change in a relative positional relationship between the first housing part 210 and the second housing part 220.

FIG. 4A is a cross-sectional view of an electronic device according to an embodiment in a first state. FIG. 4B is a cross-sectional view of an electronic device according to an embodiment in a second state.

For example, FIG. 4A is a cross-sectional view of an electronic device 101 according to an embodiment, cut along line A-A' of FIG. 2A. For example, FIG. 4B is a cross-sectional view of the electronic device 101 according to an embodiment, cut along line B-B' of FIG. 2C.

Referring to FIGS. 4A and 4B, a motor 361 may be operated based at least in part on the defined user input received in a state 490, which is the first state. For example, a pinion gear 362 may be rotated in a first rotational direction 411 based at least in part on the operation of the motor 361. A rack gear 363 may be moved in a first direction 261 based at least in part on the rotation of the pinion gear 362 in the first rotational direction 411. A second housing part 220 may be moved in the first direction 261 based at least in part on the movement of the rack gear 363 in the first direction 261. A second cover 321 in the second housing part 220 may be moved based at least in part on the movement of the rack gear 363 in the first direction 261. A display 230 may be moved along rails 313a. A shape of at least a portion of the plurality of bars of a support member 331 of the display 230 may be changed when the state 490 is changed to a state 495, which is the second state.

For example, a second display area 230b of the display 230 may be moved in accordance with the movement of the display 230. The second display area 230b may be moved through a space between a first cover 311 and a frame 313 when the state 490 is changed to the state 495 in accordance with the defined user input. The second display area 230b in the state 495 may be exposed, unlike the second display area 230b rolled into the space in the state 490.

For example, since the second cover 321 in the second housing part 220 is coupled to a PCB 324 connected to the other end of an FPCB 325 and fixes the rack gear 363, a shape of the FPCB 325 may be changed when the state 490 is changed to the state 495.

The motor 361 may be operated based at least in part on the defined user input received in the state 495. For example, the pinion gear 362 may be rotated in a second rotational direction 412 based at least in part on the operation of the motor 361. The rack gear 363 may be moved in a second direction 262 based at least in part on the rotation of the pinion gear 362 in the second rotational direction 412. The second housing part 220 may be moved in the second direction 262 based at least in part on the movement of the rack gear 363 in the second direction 262. The display 230 may be moved based at least in part on the movement of the rack gear 363 in the second direction 262. The display 230 may be moved along the rails 313a. A shape of at least a portion of the plurality of bars of the support member 331 of the display 230 may be changed when the state 495 is changed to the state 490. The support member 331 may be moved with respect to a first housing part 210. The support member 331, accommodated inside the first housing part 210 in the state 490, may be positioned between the first cover 311 and the frame 313. The display 230 may be moved with respect to the first housing part 210 in accordance with the movement of the support member 331.

For example, the second display area 230b of the display 230 may be moved in accordance with the movement of the display 230. The second display area 230b may be moved through the space between the first cover 311 and the frame 313 when the state 495 is changed to the state 490 in accordance with the defined user input. The second display area 230b in the state 490 may be rolled into the space, unlike the second display area 230b exposed in the state 495.

For example, since the second cover 321 of the second housing part 220 is coupled to the PCB 324 connected to the other end of the FPCB 325 and fixes the rack gear 363, the shape of the FPCB 325 may be changed when the state 495 is changed to the state 490.

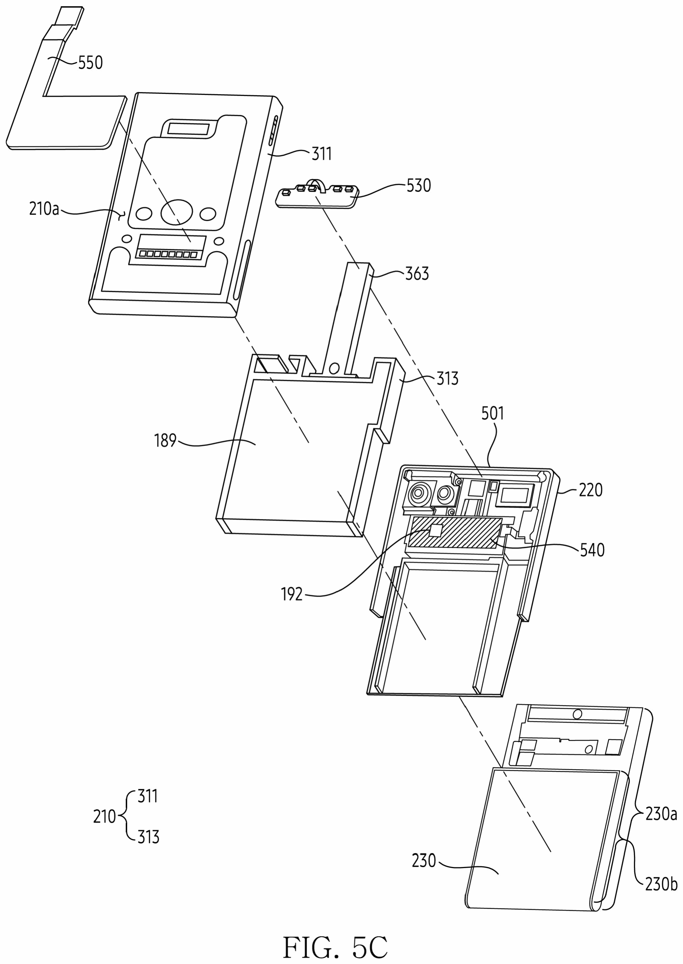

FIG. 5A illustrates the inside of an electronic device according to an embodiment in a first state. FIG. 5B illustrates the inside of an electronic device according to an embodiment in a second state. FIG. 5C is an exploded perspective view of an electronic device according to an embodiment.

Referring to FIGS. 5A, 5B, and 5C, an electronic device 101 according to an embodiment may include a housing 201, a rack gear 363, a conductive portion 510, wireless communication circuitry (e.g., the wireless communication module 192 of FIG. 1), and a first substrate 530.

For example, the housing 201 part may include a first housing part 210 and a second housing part 220 movably coupled to each other. For example, the first housing part 210 may be movably coupled to the second housing part 220 in a first direction 261 and a second direction 262. However, it is not limited thereto. For example, "the first housing part 210 is movably coupled to the second housing part 220" may refer to a change in a relative position between the first housing part 210 and the second housing part 220 with respect to each other. The first housing part 210 and the second housing part 220 may be referred to as the first housing part 210 and the second housing part 220 described with reference to FIGS. 2A to 4B. A state in which the second housing part 220 is movable in the first direction 261 (e.g., a slide-in state) may be referred to as the first state illustrated in FIGS. 2A and 5A. A state in which the second housing part 220 is movable in the second direction 262 (e.g., a slide-out state) may be referred to as the second state illustrated in FIGS. 2B and 5B.

For example, a driving unit 360 may be configured to provide a driving force that changes a shape of the housing 201. For example, the driving unit 360 may include a motor 361, the rack gear 363, and/or a pinion gear (e.g., the pinion gear 362 of FIG. 3B).

For example, the motor 361 may operate based on power supplied from a battery 189. The pinion gear 362 may be coupled to the motor 361 through a shaft. For example, the pinion gear 362 may be rotated based on a rotational operation of the motor 361 transmitted through the shaft. For example, the rack gear 363 may be moved based on the rotation of the pinion gear 362 by engaging with the pinion gear 362. For example, teeth of the rack gear 363 may engage with teeth of the pinion gear 362. As the pinion gear 362 rotates, the pinion gear 362 may move the rack gear 363 in the first direction 261 or the second direction 262. For example, the rack gear 363 may be moved in the first direction 261 or the second direction 262 based on the rotational direction of the pinion gear 362.

For example, the rack gear 363 may be coupled to a portion of the first housing part 210. For example, the first housing part 210 may include a first cover 311 and a frame 313. For example, the frame 313 may be at least partially surrounded by the first cover 311. For example, the battery 189 may be coupled to the frame 313. For example, the rack gear 363 may be coupled to the first housing part 210 by being fixed to the frame 313. When the rack gear 363 is moved by a driving force provided from the motor 361, the rack gear 363 may cause a change in the relative positional relationship between the first housing part 210 and the second housing part 220. For example, when the rack gear 363 is moved by the rotation of the pinion gear 362, the second housing part 220 may be moved with respect to the first housing part 210. For example, in a state in which a user is holding the first housing part 210, at least a portion of the second housing part 220 may be drawn out from or inserted into the first housing part 210 as the rack gear 363 is moved. As the rack gear 363 is moved, a distance between an end 363a of the rack gear 363 and the conductive portion 510 of the second housing part 220 may change. The change in the distance between the end 363a of the rack gear 363 and the conductive portion 510 will be described later. The first state (e.g., the first state of FIG. 2A) described above may be referred to as a state in which a distance between the conductive portion 510 and the rack gear 363 is minimum. The second state (e.g., the second state of FIG. 2C) described above may be referred to as a state in which the distance between the conductive portion 510 and the rack gear 363 is maximum.

For example, the rack gear 363 may be disposed to be parallel to a moving direction of the first housing part 210 and/or the second housing part 220. For example, the rack gear 363 may extend parallel to the first direction 261 and the second direction 262. As the rack gear 363 is parallel to the moving direction, the rack gear 363 may move along the moving direction based on the rotation of the pinion gear 362. When the rack gear 363 is moved along the moving direction, the second housing part 220 may be moved along the moving direction.

Referring to FIG. 5C, a display 230 may include a first display area 230a and a second display area 230b. The first display area 230a may be a portion of the display 230 that is always visible from the outside, independently of the state of the electronic device 101. For example, regardless of whether the electronic device 101 is in the first state or the second state, the first display area 230a may be a planar portion that is flat. The second display area 230b may be a bendable portion that is at least partially deformable in accordance with the movement of the second housing part 220. For example, the display 230 may be coupled to the second housing part 220. The display 230 may be configured to be moved based on the movement of the second housing part 220.

In the first state, at least a portion of the second display area 230b may be rollable into the inside of the first housing part 210. In the second state, at least a portion of the second display area 230b may be exposed to the outside and unfolded. As the display 230 is moved, a position of the second display area 230b may be changed. For example, in the first state, the second display area 230b may be positioned inside the first housing part 210. For example, in the second state, at least a portion of the second display area 230b may be positioned outside the first housing part 210. When the second display area 230b is positioned outside the first housing part 210, the second display area 230b may be unfolded, thereby expanding a display area of the display 230. For example, the first display area 230a may be referred to as the above-described area (e.g., the first display area 230a of FIG. 2A), and the second display area 230b may be referred to as the above-described area (e.g., the second display area 230b of FIG. 2C).

Referring to FIG. 5C, the electronic device 101 may include a first substrate 530, a second substrate 540, and/or a third substrate 550. For example, the first substrate 530, the second substrate 540, and the third substrate 550 may be printed circuit boards. For example, the first substrate 530, the second substrate 540, and/or the third substrate 550 may include a plurality of conductive layers and a plurality of non-conductive layers alternately laminated with the plurality of conductive layers. The first substrate 530, the second substrate 540, and/or the third substrate 550 may provide electrical connections between various electronic components using wirings and conductive vias formed in the conductive layers.

For example, the second substrate 540 may be disposed in the second housing part 220. For example, an electronic component in the second housing part 220 may be electrically connected to the second substrate 540. For example, the wireless communication circuitry 192 may be disposed on the second substrate 540. For example, the third substrate 550 may be disposed on a surface 210a of the first housing part 210. To provide a space for at least a portion of the second housing part 220 and/or at least a portion of the display 230 to be positioned inside the first housing part 210, the third substrate 550 may be disposed on the surface 210a of the first housing 201, rather than the inside of the first housing 201. For example, the third substrate 550 may be electrically connected to the second substrate 540 through a connecting member (e.g., a flexible printed circuit board and/or a flexible printed circuit board radio frequency cable (FRC)). An electronic component in the first housing part 210 and an electronic component in the second housing part 220 may be electrically connected through the second substrate 540, the connecting member, and the third substrate 550.

Referring again to FIGS. 5A and 5B, the first substrate 530 may be a substrate for the conductive portion 510 used for communication with an external electronic device. For example, the first substrate 530 may be disposed in the second housing part 220. For example, the first substrate 530 may be electrically connected to the conductive portion 510 that operates as an antenna radiator. For example, the first substrate 530 may be positioned adjacent (e.g., in the -y direction) to a first lateral side 220a. However, it is not limited thereto. For example, the first substrate 530 may include a printed circuit board on which at least one component (e.g., a flash) is disposed. In such a case, the conductive portion 510 may be electrically connected to the second substrate 540. For example, the conductive portion 510 may be electrically connected to the wireless communication circuitry 192 by contacting the second substrate 540.

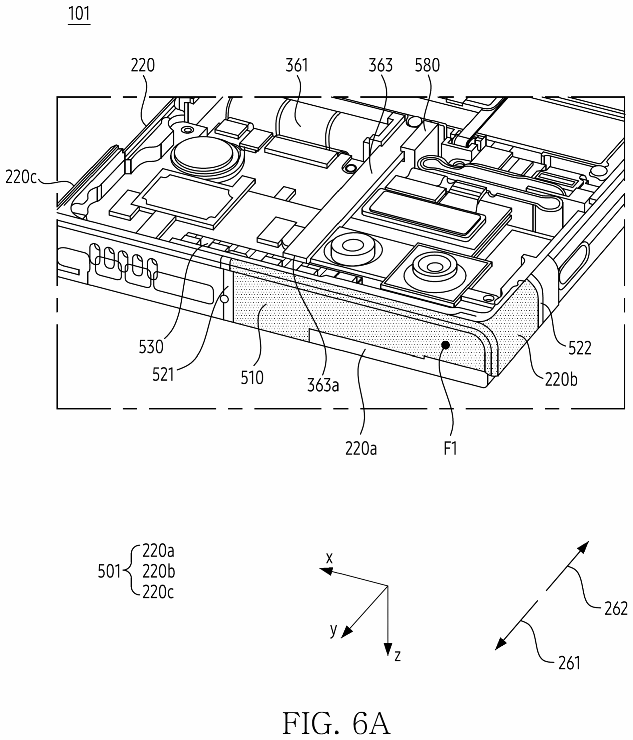

For example, the conductive portion 510 may operate as an antenna radiator capable of transmitting and/or receiving a wireless signal on a designated frequency band by being fed from the wireless communication circuitry 192. For example, the wireless communication circuitry 192 may transmit and/or receive a first signal on a first frequency band through the conductive portion 510. For example, the wireless communication circuitry 192 may transmit and/or receive a second signal on a second frequency band different from the first frequency band through a first conductive portion (e.g., a first conductive portion 511 of FIG. 6A) that is a portion of the conductive portion 510. The conductive portion 510 used as an antenna radiator may include a conductive material (e.g., metal).

The electronic device 101 according to an embodiment may use at least one portion when performing communication with an external electronic device executed by using the wireless communication circuitry 192. For example, the wireless communication circuitry 192 may include a radio frequency integrated circuit (RFIC) and a radio frequency front end (RFFE) for wireless communication.

For example, in order for the electronic device 101 to transmit a signal to an external electronic device, the RFIC may up-convert a base band signal generated by at least one processor (e.g., the processor 120 and/or the communication processor of FIG. 1). The up-converted signal may be filtered through the RFFE. The signal may be provided from the second substrate 540 to the first substrate 530 through a connecting member. The signal may be transmitted to the external electronic device through the conductive portion 510 connected to the first substrate 530.

For example, a signal received by the electronic device 101 from the external electronic device through the conductive portion 510 may be provided to the first substrate 530. The signal may be provided from the first substrate 530 to the second substrate 540 through the connecting member. The signal may be provided to the wireless communication circuitry 192 disposed on the second substrate 540. For example, the signal may be pre-processed through the RFFE. The RFIC may down-convert the pre-processed wireless signal into a base band signal such that it may be processed by at least one processor. The down-converted signal may be provided to at least one processor (e.g., the processor 120 and/or the communication processor of FIG. 1) disposed on the second substrate 540.

For example, the first substrate 530 may be electrically connected to the second substrate 540. The electronic device 101 may include a connecting member (e.g., a flexible printed circuit board and/or a flexible printed circuit board radio frequency cable (FRC)) that is connected to each of the first substrate 530 and the second substrate 540. The wireless communication circuitry 192 may be electrically connected to the conductive portion 510 through the connecting member.

According to an embodiment, at least a portion of the conductive portion 510 may be disposed at a position corresponding to the first state in which the distance between the rack gear 363 and the conductive portion 510 is minimum or a position corresponding to the second state in which the distance is maximum, in accordance with the movement of the first housing part 210 or the second housing part 220. For example, at least a portion of the conductive portion 510 may be disposed on the first lateral side 220a of the second housing part 220 facing the first direction 261.

For example, the conductive portion 510 may be positioned in at least one lateral side 501 of the second housing part 220 that may move away from or closer to the rack gear 363. For example, a portion of the conductive portion 510 may face the rack gear 363. For example, when viewing the first lateral side 220a from the front, the conductive portion 510 may overlap with the rack gear 363. When the electronic device 101 is changed from the second state to the first state, the rack gear 363 may be moved in the first direction 261. As the rack gear 363 is moved in the first direction 261, the rack gear 363 may move closer to at least a portion of the conductive portion 510 facing the rack gear 363. When the electronic device 101 is changed from the first state to the second state, the rack gear 363 may be moved in the second direction 262. As the rack gear 363 is moved in the second direction 262, the rack gear 363 may move away from at least a portion of the conductive portion 510 facing the rack gear 363.

For example, the conductive portion 510 may be formed along a portion of the first lateral side 220a and a portion of a second lateral side 220b. For example, the second housing part 220 may include a first non-conductive portion 521 positioned in the first lateral side 220a and a second non-conductive portion 522 positioned in the second lateral side 220b. **The** conductive portion 510 may be formed between the first non-conductive portion 521 and the second non-conductive portion 522. **The** conductive portion 510 may be disconnected from other conductive portions of the first lateral side 220a and the second lateral side 220b of the second housing part 220 by the first non-conductive portion 521 and the second non-conductive portion 522.

A position of the rack gear 363 may be changed based on the state of the electronic device 101. For example, referring to FIG. 5A, in the first state, the rack gear 363 may be positioned close to at least a portion of the conductive portion 510. For example, the first state may be referred to as a state in which the distance between the rack gear 363 and the conductive part 510 is minimum. For example, in the first state, the end 363a of the rack gear 363 may be spaced apart from the first lateral side 220a by a certain distance. For example, when the electronic device 101 is changed from the second state to the first state, the rack gear 363 may be moved in the first direction 261, thereby moving closer to the at least one lateral side 501. For example, in the first state, a portion of the rack gear 363 may be positioned above (e.g., in the -z direction) the first substrate 530.

For example, referring to FIG. 5B, in the second state, the rack gear 363 may be spaced apart from the conductive portion 510. When the electronic device 101 is changed from the first state to the second state, the rack gear 363 may be moved in the second direction 262, thereby moving away from the conductive portion 510. For example, the second state may be referred to as a state in which the distance between the rack gear 363 and the conductive portion 510 is maximum.

For example, the electronic device 101 may include a holder 580 configured to guide the movement of the rack gear 363. For example, the holder 580 may at least partially surround a lateral side of the rack gear 363 and may be fixed to the second housing part 220. The holder 580 may include a recess formed along the moving direction of the rack gear 363, and the rack gear 363 may be moved in a state of being inserted into the recess. When the rack gear 363 is moved, the rack gear 363 may be moved while passing through the recess. When the rack gear 363 is moved, the holder 580 may be configured to provide stable movement of the rack gear 363 by reducing shaking of the rack gear 363.

According to an embodiment, a motor (e.g., 361 of FIG. 3A) may be disposed in the first housing part 210, and the rack gear 363 may be coupled to the second housing part 220. For example, the rack gear 363 may be coupled to a frame (e.g., the frame 313 of FIG. 3A). As the motor 361 is disposed in the first housing part 210, a space for disposing a battery (e.g., the battery 189 of FIG. 3A), which is disposed in the second housing part 220, may be additionally secured. When the motor 361 is disposed in the first housing part 210, the space for disposing the battery 189 may be secured, so a size of the battery 189 may be increased. As the size of the battery 189 is increased, charging capacity of the battery 189 may be increased. As the rack gear 363 is coupled to the second housing part 220, in the first state, the end 363a of the rack gear 363 may be in contact with the conductive portion 510 or may be positioned close to the conductive portion 510. The rack gear 363 may include a conductive material (e.g., metal) to have rigidity. When the rack gear 363 including a conductive material moves closer to the conductive portion 510, performance of an antenna including the conductive portion 510 may deteriorate. For example, as the ungrounded rack gear 363 interferes with the conductive portion 510, the signal may be weakened or distorted.

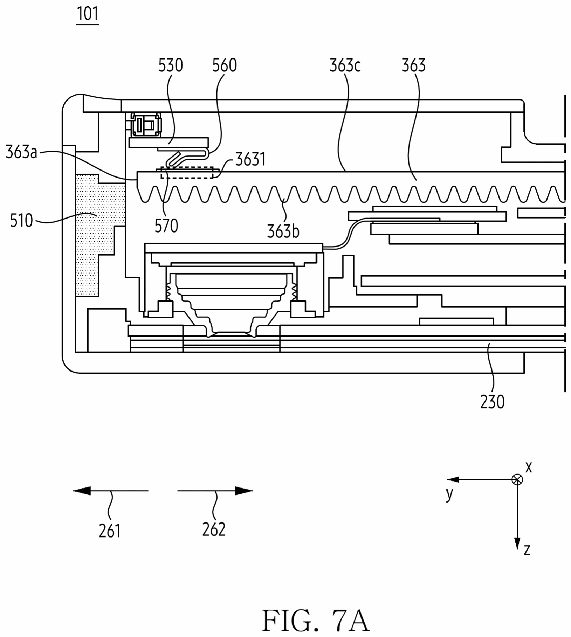

According to an embodiment, in the first state, to reduce performance degradation of the antenna by the rack gear 363 positioned close to the conductive portion 510, the rack gear 363 may be grounded. For example, in the first state, the rack gear 363 may include a first portion (e.g., a first portion 3631 of FIG. 7A) that may be electrically connected to a ground portion of the first substrate 530. For example, the ground portion may include a ground layer of the first substrate 530 electrically connected to a ground plane of the electronic device 101. The rack gear 363 may be grounded by being electrically connected to the ground portion of the first substrate 530. As the rack gear 363 is grounded, interference with the conductive portion 510 may be reduced, such that degradation of communication performance of the electronic device 101 may be reduced.

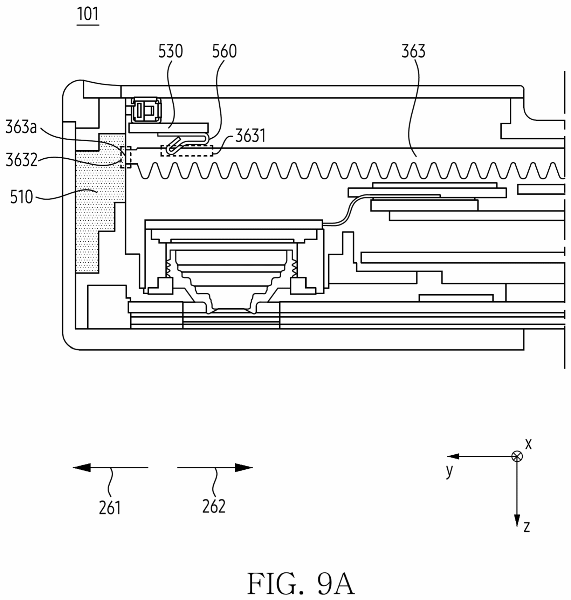

According to an embodiment, the rack gear 363 may provide a ground path for the antenna including the conductive portion 510 by being in contact with the conductive portion 510 or coupled to the conductive portion 510 in a grounded state. For example, the rack gear 363 may include a second portion (e.g., a second portion 3632 of FIG. 9A) that may be in contact with the conductive portion 510 in the first state. As the rack gear 363 provides the ground path for the antenna, the communication performance of the electronic device may be improved.

According to an embodiment, in the first state, to improve radiation performance of the antenna including the conductive portion 510, the rack gear 363 may improve the radiation performance of the antenna including the conductive portion 510 by being in contact with the conductive portion 510. As the radiation performance of the antenna is improved, the communication performance of the electronic device 101 may be improved.

Hereinafter, examples of the structures will be described with reference to the drawings.

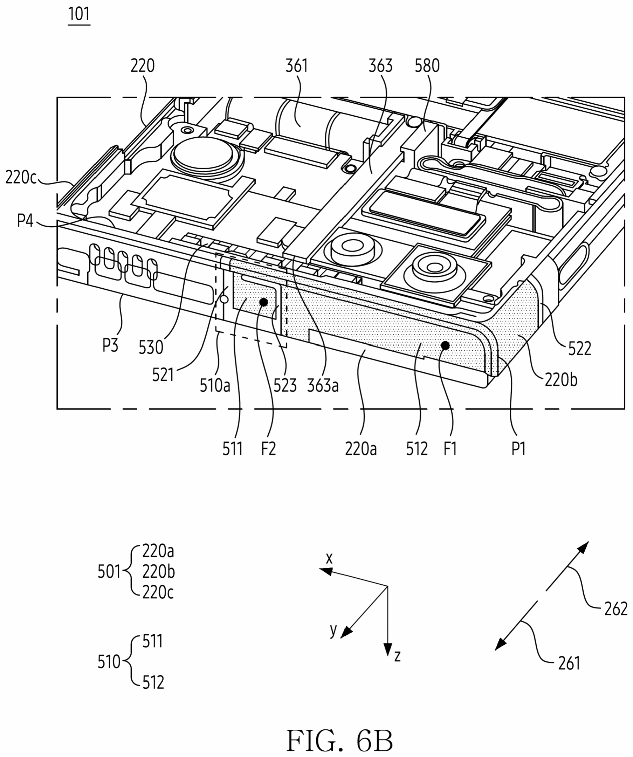

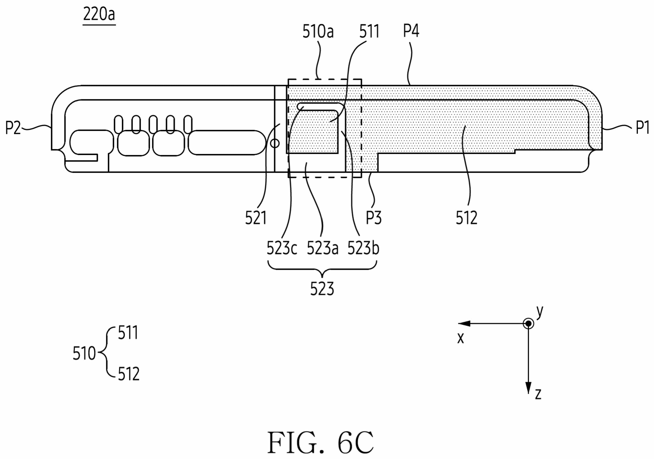

FIGS. 6A and 6B are perspective views of an electronic device according to an embodiment in a first state. FIG. 6C illustrates a first lateral side of an electronic device according to an embodiment in a first state.

Referring to FIG. 6A, in an example, a conductive portion 510 may be formed along a portion of at least one lateral side 501 of a second housing part 220. For example, the second housing part 220 may include a first lateral side 220a, a second lateral side 220b, and a third lateral side 220c. For example, the first lateral side 220a may be a lateral side of the second housing part 220 facing a first direction 261. For example, the first direction 261 may be referred to as a direction in which an electronic device 101 slides out. For example, the first lateral side 220a may face a first housing part 210 and/or a rack gear 363. For example, the first direction 261 may be a +y direction, but is not limited thereto.

For example, the second lateral side 220b may be a lateral side of the second housing part 220 perpendicular to the first lateral side 220a. For example, the second lateral side 220b may be a lateral side of the second housing part 220 facing a -x direction. For example, the third lateral side 220c may be opposite to the second lateral side 220b. For example, the third lateral side 220c may be a lateral side of the second housing part 220 facing a +x direction.

For example, the conductive portion 510 may extend from a first non-conductive portion 521 in the first lateral side 220a to a second non-conductive portion 522 in the second lateral side 220b. For example, the conductive portion 510 may be formed between the first non-conductive portion 521 and the second non-conductive portion 522.

For example, the conductive portion 510 may operate as an antenna radiator capable of transmitting and/or receiving a signal on a designated frequency band by being fed through wireless communication circuitry (e.g., the wireless communication circuitry 192 of FIG. 5A). For example, the conductive portion 510 may operate as an antenna radiator capable of transmitting and/or receiving a first signal on a first frequency band. The conductive portion 510 may include a first feeding portion F1. A frequency characteristic (e.g., resonant frequency) of the first signal transmitted and/or received through an antenna (e.g., a first antenna) including the conductive portion 510 may be determined based on a length of the conductive portion 510.

Referring to FIG. 6B, the conductive portion 510 and/or a portion of the conductive portion 510 (e.g., a first conductive portion 511) may operate as an antenna radiator. For example, the second housing part 220 may include a slit 523. For example, the slit 523 may be positioned in the first lateral side 220a. For example, the slit 523 may extend from a portion of the first non-conductive portion 521. For example, the slit 523 may be filled with a non-conductive material (e.g., resin and/or polymer).

For example, the conductive portion 510 may include a first conductive portion 511 and/or a second conductive portion 512. For example, the first conductive portion 511 may be included in a partial region 510a of the conductive portion 510 including the slit 523. For example, the first conductive portion 511 may be a portion of the conductive portion 510 at least partially surrounded by the slit 523 and the first non-conductive portion 521. For example, the second conductive portion 512 may be a portion of the conductive portion 510 excluding the first conductive portion 511.

For example, the first conductive portion 511, which is a portion of the conductive portion 510, may operate as an antenna radiator capable of transmitting and/or receiving a signal on a designated frequency band by being fed through wireless communication circuitry (e.g., the wireless communication circuitry 192 of FIG. 5A). For example, the second conductive portion 512 may operate as an antenna radiator capable of transmitting and/or receiving a second signal on a second frequency band.

For example, referring to FIG. 6C, the first lateral side 220a may include a first periphery P1, a second periphery P2, a third periphery P3, and a fourth periphery P4. For example, the first periphery P1 may be a periphery of the first lateral side 220a that is in contact with the second lateral side (e.g., the second lateral side 220b of FIG. 6A). For example, the first periphery P1 may face a -x direction. For example, the second periphery P2 may be a periphery of the first lateral side 220a opposite to the first periphery P1. For example, the second periphery P2 may face a +x direction. For example, the third periphery P3 may be a periphery of the first lateral side 220a that is positioned between the first periphery P1 and the second periphery P2, and that faces a display (e.g., the display 230 of FIG. 5C). For example, the third periphery P3 may face a +z direction. For example, the fourth periphery P4 may be a periphery of the first lateral side 220a opposite to the third periphery P3. For example, the fourth periphery P4 may face a -z direction. The directions described above may indicate relative positions. For example, in a case in which the electronic device 101 illustrated in the drawing is flipped, the directions described above may change.

For example, the first lateral side 220a may include the slit 523. For example, the slit 523 may be formed in the partial region 510a of the conductive portion 510. For example, the slit 523 may include a first portion 523a extending along the third periphery P3 from a side of the first non-conductive portion 521, a second portion 523b extending toward the fourth periphery P4 from an end of the first portion 523a, and a third portion 523c extending toward the second periphery P2 from an end of the second portion 523b positioned between the third periphery P3 and the fourth periphery P4. However, the slit 523 described above is merely illustrative and is not limited thereto.

For example, the first conductive portion 511 may contact the slit 523. For example, a portion of the first conductive portion 511 may be surrounded by the first portion 523a, the second portion 523b, and the third portion 523c. For example, at least a portion of the slit 523 may be positioned between the first conductive portion 511 and the second conductive portion 512. The first conductive portion 511 and the second conductive portion 512 may be connected to each other through a portion in which the slit 523 is not formed. An antenna (e.g., a second antenna) including only the first conductive portion 511, which is a portion of the conductive portion 510, may be referred to as a slit antenna. The antenna including only the first conductive portion 511 may be referred to as an antenna that transmits and/or receives a wireless signal through the first conductive portion 511, which is a portion of the conductive portion 510. For example, the second antenna including only the first conductive portion 511 may use the first conductive portion 511 as a main radiator of the antenna.

For example, when the conductive portion 510 includes the first conductive portion 511 and the second conductive portion 512, two antennas may be formed in accordance with a position of a feeding point. For example, the antenna (e.g., the first antenna) including the conductive portion 510 and the antenna (e.g., the second antenna) including only the first conductive portion 511 may be distinguished by the position of the feeding point. For example, the first lateral side 220a may include a first feeding portion F1 for the antenna including the conductive portion 510 and a second feeding portion F2 for the antenna including only the first conductive portion 511. When the wireless communication circuitry 192 feeds the first feeding portion F1, the first feeding portion F1 may operate as a feeding point of the antenna (e.g., the first antenna) including the conductive portion 510. When the wireless communication circuitry 192 feeds the second feeding portion F2, the second feeding portion F2 may operate as a feeding point of the antenna (e.g., the second antenna) including only the first conductive portion 511.

For example, positions of the first feeding portion F1 and the second feeding portion F2 may be different. For example, the first feeding portion F1 may be spaced apart from the partial region 510a including the slit 523 in the first conductive portion 511. For example, the first feeding portion F1 may be formed at a position in the first lateral side 220a spaced apart from the partial region 510a or at a position in the second lateral side 220b between the second non-conductive portion 522 and the first periphery P1. When the wireless communication circuitry 192 feeds the first signal on the first frequency band to the first feeding portion F1, radiation current may flow along the conductive portion 510. An electromagnetic field may be formed in the conductive portion 510 by the radiation current, and the first signal may be transmitted using the electromagnetic field.

For example, the second feeding portion F2 may be positioned in the first conductive portion 511 at least partially surrounded by the first non-conductive portion 521 and the slit 523. When the wireless communication circuitry 192 feeds the second signal on the second frequency band to the second feeding portion F2, radiation current may flow along the first conductive portion 511 adjacent to the slit 523. An electromagnetic field may be formed in the first conductive portion 511 by the radiation current, and the second signal may be transmitted using the electromagnetic field.

For example, a frequency characteristic (e.g., resonant frequency) of the first signal and a frequency characteristic (e.g., resonant frequency) of the second signal may be determined based on a length of an antenna radiator. For example, when a wavelength corresponding to a resonant frequency of a signal is denoted as λ, a length of an antenna radiator may be approximately 1/4λ to approximately 1/2λ. For example, since the first conductive portion 511 is included in the partial region 510a of the conductive portion 510, a length of the conductive portion 510 may be greater than a length of the first conductive portion 511. Since the length of the conductive portion 510 is greater than the length of the first conductive portion 511, the frequency band of the second signal may be higher than the frequency band of the first signal. For example, the frequency band of the first signal may include a low-band range (e.g., approximately equal to or less than 1 GHz), and the frequency band of the second signal may include a mid-band range (e.g., approximately 2.5 GHz to 3 GHz). However, it is not limited thereto.

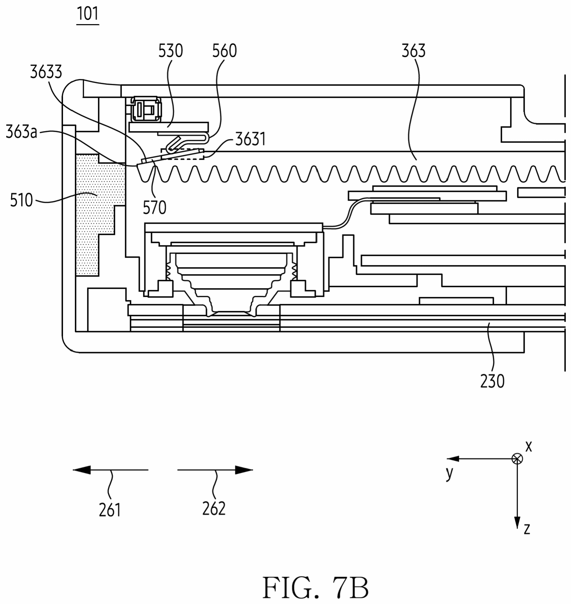

FIGS. 7A and 7B illustrate an example of a cross-sectional view of an electronic device cut along line C-C' of FIG. 5A.

Referring to FIG. 7A, a rack gear 363 may include a first portion 3631 that is electrically connected to a ground portion of a first substrate 530 in a first state. For example, the first portion 3631 may be formed on a surface 363c, which is opposite to a surface on which teeth 363b of the rack gear 363 that engage with teeth of a pinion gear (e.g., the pinion gear 362 of FIG. 5A) are positioned. For example, the first portion 3631 may face the first substrate 530 in the first state.

When an electronic device 101 is changed from a second state to the first state, the rack gear 363 may be moved in a first direction 261 in a state of being coupled to a first housing part 210. As the rack gear 363 is moved, an end 363a of the rack gear 363 facing the first direction 261 may move closer to a conductive portion 510. In the first state, the end 363a of the rack gear 363 may be spaced apart from the conductive portion 510. For example, a gap may be formed between the end of the rack gear 363 and the conductive portion 510.

The rack gear 363 may include a conductive material (e.g., metal) to have rigidity. Communication performance of the electronic device 101 may deteriorate by the rack gear 363. For example, since the rack gear 363 is positioned close to the conductive portion 510, when the conductive portion 510 operates as an antenna radiator, the conductive material included in the rack gear 363 and the antenna radiator may electromagnetically interact. For example, as the rack gear 363 interferes with a signal transmitted and/or received through the antenna radiator, the signal may be weakened or distorted. To reduce an effect of the rack gear 363 on the antenna radiator, the rack gear 363 may be grounded.

For example, the electronic device 101 may further include a conductive connecting member 560. The conductive connecting member 560 may electrically connect the first portion 3631 and a ground portion of the first substrate 530 by contacting each of the first portion 3631 and the ground portion. For example, the conductive connecting member 560 may include a c-clip, a conductive tape, a screw, and/or a spring pin, but is not limited thereto. The rack gear 363 may be grounded by being electrically connected to the ground portion of the first substrate 530 through the conductive connecting member 560. As the rack gear 363 is grounded, degradation of the communication performance of the electronic device 101 may be reduced. For example, as the rack gear 363 is grounded, electromagnetic interaction between the rack gear 363 and the antenna radiator may be reduced. For example, as the rack gear 363 is grounded, interference by the rack gear 363 with a signal transmitted and/or received through the antenna radiator may be reduced.

Referring to FIG. 7B, the rack gear 363 may include a chamfer portion 3633. For example, the chamfer portion 3633 may be at least partially included in the first portion 3631. When the rack gear 363 is moved in the first direction 261, the end 363a of the rack gear 363 may be in contact with the conductive connecting member 560. As the rack gear 363 continues move in the first direction 261, the end 363a of the rack gear 363 may push the conductive connecting member 560, and the conductive connecting member 560 may be at least partially compressed. In the first state, the conductive connecting member 560 may be in contact with the first portion 3631.

For example, before the conductive connecting member 560 contacts the first portion 3631, the conductive connecting member 560 may be pushed by the end 363a of the rack gear 363 and contact a portion other than the first portion 3631 of the rack gear 363. Since the other portion of the rack gear 363 is moved in the first direction 261 while maintaining contact with the conductive connecting member 560, friction may occur between the conductive connecting member 560 and the other portion before the first portion 3631 and the conductive connecting member 560 come into contact. Due to the friction, damage to the conductive connecting member 560 and/or the rack gear 363 may occur, or unstable grounding of the rack gear 363 may be caused. For example, due to rigidity of the conductive connecting member 560 and rigidity of the rack gear 363, the conductive connecting member 560 and/or the rack gear 363 may be broken. For example, when the conductive connecting member 560 and the rack gear 363 include different conductive materials (e.g., metal), galvanic corrosion may occur between dissimilar metals. Due to the galvanic corrosion, an oxide film may be generated on the conductive connecting member 560 and/or the rack gear 363. The oxide film may cause unstable contact between the conductive connecting member 560 and the first portion 3631. The unstable contact may cause a de-sense phenomenon due to noise. As the contact between the conductive connecting member 560 and the first portion 3631 becomes unstable, the grounding of the rack gear 363 may become unstable.

The rack gear 363 may reduce the damage and provide stable grounding by including the chamfer portion 3633. For example, the chamfer portion 3633 may be formed by removing at least a portion of the first portion 3631, such that at least a portion of the first portion 3631 has an inclination with respect to the first direction 261. For example, the chamfer portion 3633 may have an inclination in a direction toward a display 230 (e.g., a +z direction) with respect to the first direction 261. When the electronic device 101 is changed from the second state to the first state, the chamfer portion 3633 of the rack gear 363 may first come into contact with the conductive connecting member 560. The conductive connecting member 560 may contact the first portion 3631 by sliding along the inclined surface formed by the chamfer portion 3633. Since the pressure between the first portion 3631 of the rack gear 363 and the conductive connecting member 560 may be reduced by the chamfer portion 3633, damage to the conductive connecting member 560 and/or the rack gear 363 may be reduced, and friction between the conductive connecting member 560 and the rack gear 363 may be reduced. Due to the reduction of the friction, galvanic corrosion may be reduced, thereby reducing unstable grounding.

According to an embodiment, the electronic device 101 may further include a protective sheet 570 disposed between the conductive connecting member 560 and the first portion 3631. Referring to FIG. 7A, the protective sheet 570 may be disposed on the first portion 3631 in contact with the conductive connecting member 560. Referring to FIG. 7B, the protective sheet 570 may be disposed on the chamfer portion 3633 in contact with the conductive connecting member 560. For example, the protective sheet may include a metal sheet, but is not limited thereto. By disposing the protective sheet 570 on a portion of the rack gear 363 in contact with the conductive connecting member 560 (e.g., the first portion 3631 and/or the chamfer portion 3633), direct contact between the conductive connecting member 560 and the rack gear 363, which include different metals, may be reduced. As galvanic corrosion between the conductive connecting member 560 and the rack gear 363 is reduced by the protective sheet 570, durability of the conductive connecting member 560 and the rack gear 363 may be improved.

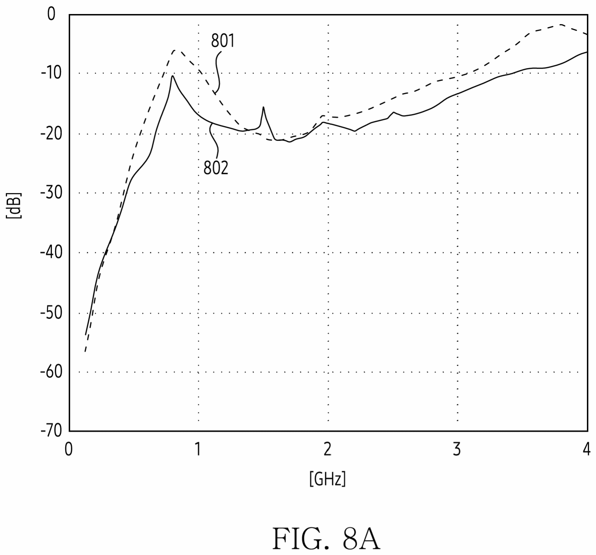

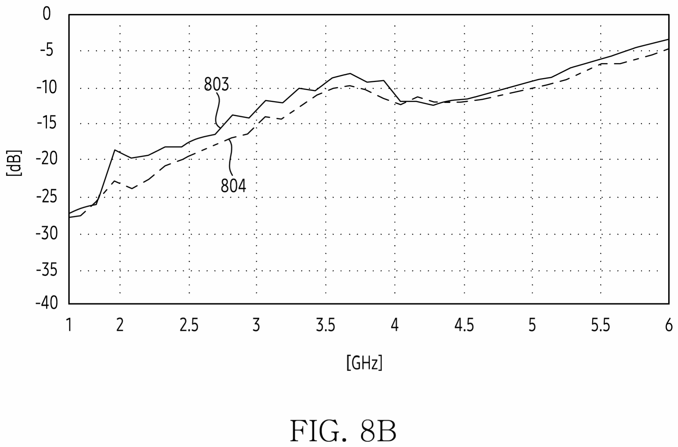

FIG. 8A is a graph indicating efficiency of a first antenna in a first state. FIG. 8B is a graph indicating efficiency of a second antenna in a first state.

An x-axis of the graphs illustrated in FIGS. 8A and 8B is frequency (unit: gigahertz (GHz)), and a y-axis of the graphs is efficiency (unit: decibel (dB)).

A first graph 801 of FIG. 8A and a third graph 803 of FIG. 8B indicate efficiency of an antenna (e.g., the first antenna) including a conductive portion (e.g., the conductive portion 510 of FIG. 6A) of an electronic device 101 according to an embodiment in the first state. A second graph 802 of FIG. 8A and a fourth graph 804 of FIG. 8B indicate efficiency of an antenna (e.g., the second antenna) including only a first conductive portion (e.g., the first conductive portion 511 of FIG. 6B) of an electronic device according to a comparative example in the first state. The electronic device 101 according to an embodiment may include a rack gear 363 that is grounded by being electrically connected to a ground portion of a first substrate 530 in the first state. The electronic device 101 according to the comparative example may include a rack gear 363 that is not grounded in the first state. The electronic device according to the comparative example may be substantially the same as the electronic device 101 according to an embodiment, except for the grounding status of the rack gear.

Referring to FIG. 8A, in the first state, performance of the first antenna may vary in accordance with whether the rack gear 363 is grounded. When comparing the first graph 801 and the second graph 802 of FIG. 8A, in a frequency band of approximately equal to or less than 4 GHz, the efficiency of the first antenna of the electronic device 101 according to an embodiment may be higher than the efficiency of the first antenna of the electronic device according to the comparative example. For example, in a frequency band of approximately equal to or less than 1 GHz, the first graph 801 may have higher efficiency than the second graph 802. For example, when a first signal transmitted and/or received through the first antenna is a signal on a low-band range, communication performance of the electronic device 101 according to an embodiment may be better than communication performance of the electronic device according to the comparative example.

Referring to FIG. 8B, in the first state, performance of the second antenna including only the first conductive portion 511 may vary in accordance with whether the rack gear 363 is grounded. When comparing the third graph 803 and the fourth graph 804 of FIG. 8B, in a frequency band between approximately 1.8 GHz and approximately 6 GHz, the efficiency of the second antenna of the electronic device 101 according to an embodiment may be higher than the efficiency of the second antenna of the electronic device according to the comparative example.

For example, as the rack gear 363 is moved, in the first state, the rack gear 363 may be positioned close to the conductive portion 510. When the rack gear 363 is not grounded, the first antenna and the second antenna may be affected by the rack gear 363, resulting in reduced radiation efficiency. Since the electronic device 101 according to an embodiment includes the rack gear 363 that is grounded in the first state, the effect of the rack gear 363 on the first antenna and the second antenna may be reduced. According to an embodiment, as the effect of the rack gear 363 is reduced, the efficiency of the first antenna and the second antenna may be improved. The electronic device 101 according to an embodiment may have improved communication performance by reducing degradation of communication performance by the rack gear 363.

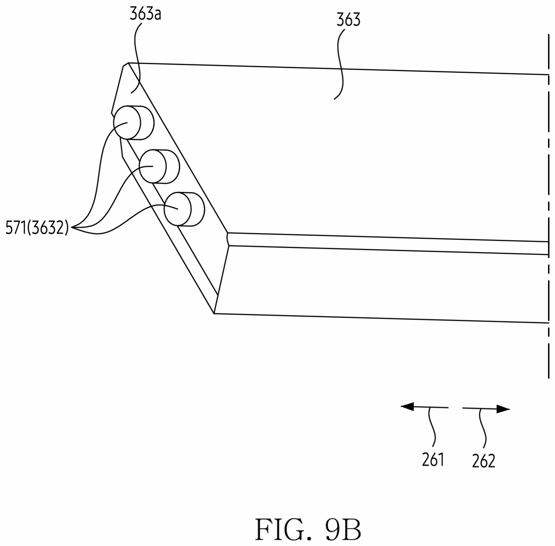

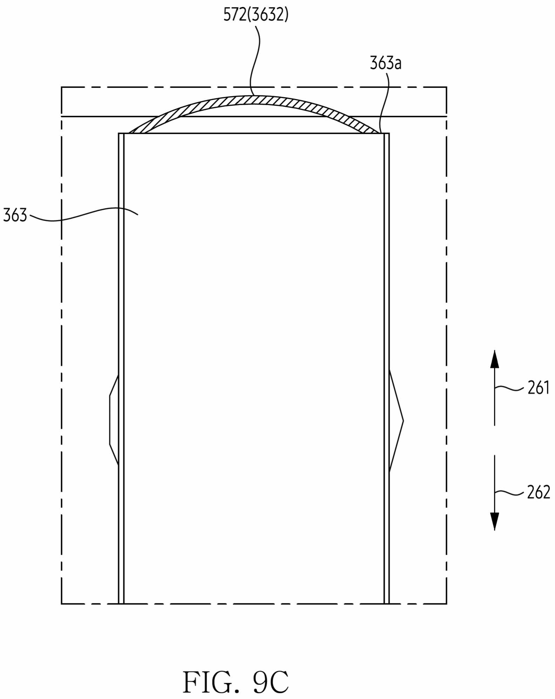

FIG. 9A illustrates an example of a cross-sectional view of an electronic device cut along line C-C' of FIG. 5A. FIGS. 9B and 9C illustrate an example of a second portion of a rack gear.

Referring to FIG. 9A, a rack gear 363, in a first state, may include a second portion 3632 that may be in contact with a conductive portion 510. For example, the second portion 3632 may be included in an end 363a of the rack gear 363 facing a first direction 261. When an electronic device 101 is changed from a second state to the first state, as the rack gear 363 is moved in the first direction 261, the second portion 3632 of the rack gear 363 may move closer to the conductive portion 510. When the electronic device 101 is in the first state, the second portion 3632 may be in direct contact with the conductive portion 510. When the second portion 3632 is in contact with the conductive portion 510, a first portion 3631 of the rack gear 363 may be electrically connected to a ground portion of a first substrate 530. For example, the rack gear 363 illustrated in FIG. 9A may include the first portion 3631 that is electrically connected to the ground portion of the first substrate 530 through a conductive connecting member 560, and the second portion 3632 in contact with the conductive portion 510.

For example, as the rack gear directly contacts the conductive portion 510, the rack gear 363 may provide a ground path for an antenna including the conductive portion 510. For example, the rack gear 363 grounded to the ground portion of the first substrate 530 through the first portion 3631 may be electrically connected to the conductive portion 510 by contacting the conductive portion 510 through the second portion 3632. As the grounded rack gear 363 contacts the conductive portion 510, the rack gear 363 may provide the ground path of the antenna. Radiation current flowing along the conductive portion 510 may flow to ground through the rack gear 363. As the ground path of the antenna is added, performance of the antenna may be improved. For example, noise received or reflected by the conductive portion 510 operating as an antenna radiator may flow to the ground through the ground path provided by the rack gear 363, thereby reducing antenna performance degradation due to noise.

The second portion 3632 of the rack gear 363 in contact with the conductive portion 510 may be implemented in various forms. For example, referring to FIG. 9B, the second portion 3632 may include at least one protrusion 571 disposed on the end 363a of the rack gear 363. For example, the at least one protrusion 571 may protrude from the end 363a of the rack gear 363 toward the first direction 261. For example, the at least one protrusion 571 may include a plurality of protrusions arranged along the end 363a, but is not limited thereto. The at least one protrusion 571 may include a conductive material (e.g., metal). In the first state, the at least one protrusion 571 may electrically connect the rack gear 363 and the conductive portion 510 by contacting the conductive portion (e.g., the conductive portion 510 of FIG. 9A). Since the first portion (e.g., the first portion 3631 of FIG. 9A) of the rack gear 363 is grounded through the ground portion of the first substrate (e.g., the first substrate 530 of FIG. 9A), the rack gear 363 that is in contact with the conductive portion 510 through the at least one protrusion 571 may provide a ground path for the antenna.

For example, referring to FIG. 9C, the second portion 3632 may include an elastic structure 572 disposed at the end 363a of the rack gear 363. For example, the elastic structure 572 may include a plate spring, a leaf spring, and/or a flexible plate, but is not limited thereto. For example, both ends of the elastic structure 572 may be coupled to the end 363a of the rack gear 363. The elastic structure 572 between the both ends coupled to the end 363a may protrude from the end 363a of the rack gear 363 toward the first direction 261. The elastic structure 572 may include a conductive material (e.g., metal). In the first state, the elastic structure 572 may electrically connect the rack gear 363 and the conductive portion 510 by contacting the conductive portion 510. Since the first portion (e.g., the first portion 3631 of FIG. 9a) of the rack gear 363 is grounded through the ground portion of the first substrate (e.g., the first substrate 530 of FIG. 9A), the rack gear 363 that is in contact with the conductive portion 510 through the elastic structure 572 may provide a ground path for the antenna.

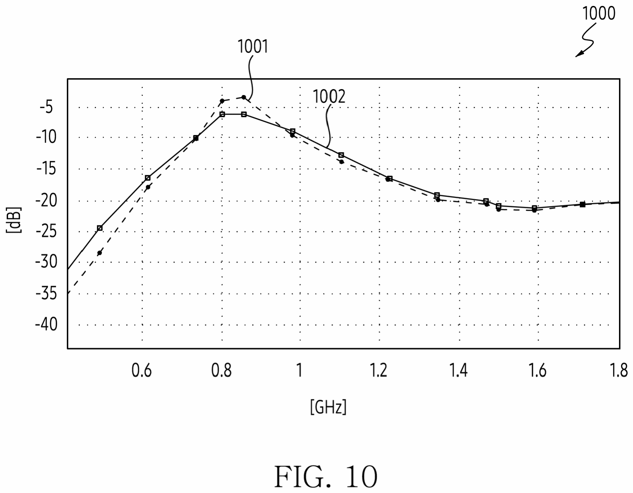

FIG. 10 is a graph indicating efficiency of a first antenna in a first state.

An x-axis of a graph 1000 is frequency (unit: GHz), and a y-axis of the graph 1000 is efficiency (unit: dB).

A first graph 1001 of FIG. 10 indicates efficiency of an antenna (e.g., the first antenna) including the conductive portion 510 of the electronic device 101 illustrated in FIG. 9A. For example, the electronic device 101 illustrated in FIG. 9A may include a rack gear 363 comprising a first portion 3631 electrically connected to a ground portion of a first substrate 530 and a second portion 3632 in contact with the conductive portion 510. A second graph 1002 of FIG. 10 illustrates efficiency of an antenna including the conductive portion 510 of an electronic device 101 illustrated in FIG. 7A. For example, the electronic device 101 illustrated in FIG. 7A may include a rack gear 363 comprising only the first portion 3631. For example, the rack gear 363 of the electronic device 101 illustrated in FIG. 7A may be spaced apart from the conductive portion 510. The rack gear 363 of the electronic device 101 illustrated in FIG. 9A and the rack gear 363 of the electronic device 101 illustrated in FIG. 7A may be grounded through the first substrate 530.

Referring to FIG. 10, in the first state, radiation efficiency of the antenna may vary based on whether the grounded rack gear 363 is in contact with the conductive portion 510 operating as an antenna radiator. For example, when comparing the first graph and the second graph, in a frequency band of approximately 0.7GHz to approximately 0.9GHz, the first graph may have higher efficiency than the second graph. For example, in a frequency band of approximately 0.8GHz to approximately 0.9Hz, the first graph may have efficiency approximately 3dB to approximately 5dB higher than the second graph. In a frequency band equal to or greater than approximately 1GHz, the second graph may have higher efficiency than the first graph.

Referring to the graph 1000 of FIG. 10, in the first state, a structure of the rack gear 363 for the first antenna to have high efficiency may be different based on a designated frequency characteristic (e.g., resonance frequency) of a signal to be transmitted and/or received through the first antenna. For example, when the first antenna transmits and/or receives a signal on a low-band range equal to or less than approximately 1GHz, in the first state, the grounded rack gear 363 may have a structure (e.g., the rack gear 363 of FIG. 9A) that may contact the conductive portion 510, thereby improving the efficiency of the first antenna. For example, when the first antenna transmits and/or receives a signal on a mid-band range equal to or greater than approximately 1GHz, in the first state, the grounded rack gear 363 may have a structure (e.g., the rack gear 363 of FIG. 7A) that may be spaced apart from the conductive portion 510, thereby improving the efficiency of the first antenna. For example, by designing a structure of the rack gear 363 based on a designated frequency characteristic of a signal to be transmitted and/or received through the first antenna, the efficiency of the first antenna may be improved. As the efficiency of the first antenna improves, communication performance of the electronic device 101 may be improved.

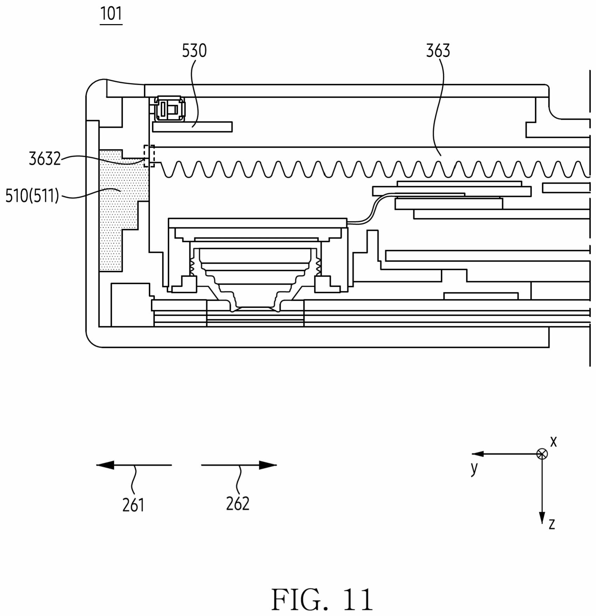

FIG. 11 illustrates an example of a cross-sectional view of an electronic device cut along line C-C' of FIG. 5A.

Referring to FIG. 11, in a first state, a rack gear 363 may include a second portion 3632 in contact with a conductive portion 510, and may be electrically disconnected from a first substrate 530. For example, in the first state, the second portion 3632 may be in direct contact with the conductive portion 510. For example, in the example illustrated in FIG. 11, a conductive connecting member 560 that electrically connects a ground portion of the first substrate 530 and the rack gear 363 may be omitted.

As the conductive connecting member 560 is omitted, the rack gear 363 may not be grounded. The ungrounded rack gear 363 may be electrically connected to the conductive portion 510 by including the second portion 3632 that directly contacts the conductive portion 510 operating as an antenna radiator in the first state. For example, the ungrounded rack gear 363 may be in direct contact with a first conductive portion 511 in the first state.

Referring again to FIG. 6B, when a second signal on a second frequency band is transmitted through the first conductive portion 511, wireless communication circuit 192 may feed the second signal on the second frequency band to a second feeding portion F2. As the second feeding portion F2 is fed, radiation current may be formed along the first conductive portion 511.

For example, a first lateral side 220a may include a ground portion positioned around a first non-conductive portion 521. The ground portion may operate as a ground point for an antenna (e.g., a first antenna) including the conductive portion 510 and an antenna (e.g., a second antenna) including only the first conductive portion 511. For example, the ground portion may provide a ground for the second antenna by being electrically connected to the ground portion of the first substrate 530. Radiation current flowing along the first conductive portion 511 may flow from the second feeding portion F2 to the ground portion and may flow through the ground portion to the ground portion of the first substrate 530. Since the first conductive portion 511 is included in a partial region 510a of the conductive portion 510 including a slit 523, an electrical path between a feeding point (e.g., the second feeding portion F2) of the second antenna and a ground point (e.g., the ground portion) of the second antenna may be short. When the electrical path is too short, radiation efficiency of the second antenna transmitting and/or receiving the second signal on a relatively high frequency band may deteriorate.

For example, the electrical path may be extended through the rack gear 363 in contact with the first conductive portion 511. As the second portion 3632 of the ungrounded rack gear 363 contacts the first conductive portion 511, radiation current formed from the second feeding portion F2 may flow along a portion of the rack gear 363. Since the rack gear 363 includes a conductive material, it may operate as a portion of an antenna radiator. An electromagnetic field may be formed by radiation current flowing along the first conductive portion 511 and a portion of the rack gear 363. The first conductive portion 511 may transmit and/or receive the second signal on the second frequency band by using the electromagnetic field. The efficiency of the second antenna may be improved by the rack gear 363 contacting the first conductive portion 511 in the first state.

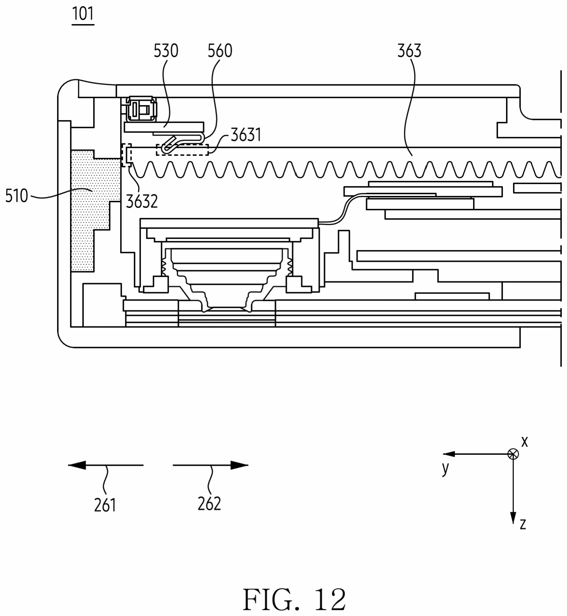

FIG. 12 illustrates an example of a cross-sectional view of an electronic device cut along line C-C' of FIG. 5A.

Referring to FIG. 12, a rack gear 363 may be spaced apart from a conductive portion 510 in a first state such that coupling may occur. For example, the rack gear 363 may include a first portion 3631 and a second portion 3632. The first portion 3631 may be electrically connected to a ground portion of a first substrate 530. The second portion 3632 may be spaced apart from the conductive portion 510 for coupling with the conductive portion 510. For example, a gap may be formed between the second portion 3632 of the rack gear 363 and the conductive portion 510. For example, the gap illustrated in FIG. 12 may be narrower than the gap illustrated in FIG. 7A. For example, the gap between the rack gear 363 and the conductive portion 510 illustrated in FIG. 12 may have a length that may at least enable coupling between the conductive portion and the second portion 3632. For example, the gap illustrated in FIG. 12 may be approximately 0.2mm, but is not limited thereto. The rack gear 363 may couple with the conductive portion 510 in a grounded state through the first portion 3631.

For example, the second portion 3632 may couple with a first conductive portion (e.g., the first conductive portion 511 of FIG. 6B). For example, a frequency band of a second signal transmitted and/or received through an antenna (e.g., a second antenna) including only the first conductive portion 511 may be relatively high. The second signal, which is a signal on a relatively high frequency band, may be coupled to the second portion 3632 spaced apart from the first conductive portion 511. The second portion 3632 positioned close to the first conductive portion 511 may improve radiation performance of the second antenna by coupling with the first conductive portion 511. For example, when the second portion 3632 couples with the first conductive portion 511, a portion of the rack gear 363 including the second portion 3632 may provide a ground path for a signal transmitted and/or received through the second antenna. For example, when the second signal is transmitted using the first conductive portion 511 and the rack gear 363 that are coupled to each other, radiation intensity of the second signal may be increased. As a ground path is provided for the second antenna and/or radiation intensity of the second signal is increased, communication performance of the second antenna may be improved.

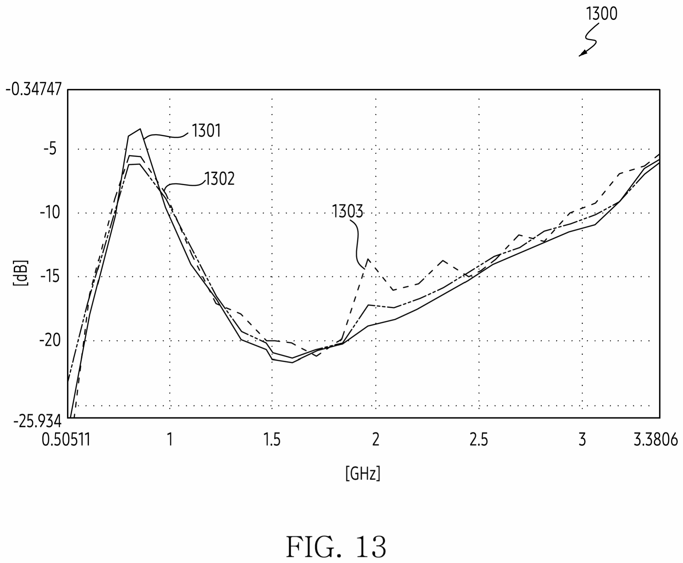

FIG. 13 is a graph indicating efficiency of a first antenna according to a structure of a rack gear in a first state.

An x-axis of a graph 1300 is frequency (unit: GHz), and a y-axis of the graph 1300 is efficiency (unit: dB).

A first graph 1301 of FIG. 13 indicates efficiency of an antenna (e.g., the first antenna) including the conductive portion 510 of the electronic device 101 illustrated in FIG. 9A. For example, the electronic device 101 illustrated in FIG. 9A may include a rack gear 363 comprising a first portion 3631 electrically connected to a ground portion of a first substrate 530 and a second portion 3632 in contact with the conductive portion 510 (e.g., a first conductive portion 511). The rack gear 363 of the electronic device 101 illustrated in FIG. 9A may be grounded through the first substrate 530.

A second graph 1302 of FIG. 13 illustrates efficiency of an antenna including the conductive portion 510 of the electronic device 101 illustrated in FIG. 7A. For example, the electronic device 101 illustrated in FIG. 7A may include a rack gear 363 comprising only the first portion 3631 electrically connected to the ground portion of the first substrate 530. For example, the rack gear 363 of the electronic device 101 illustrated in FIG. 7A may be spaced apart from the conductive portion 510. The rack gear 363 of the electronic device 101 illustrated in FIG. 7A may be grounded through the first substrate 530.

A third graph 1303 of FIG. 13 indicates efficiency of an antenna including the conductive portion 510 of the electronic device 101 illustrated in FIG. 11. For example, the electronic device 101 illustrated in FIG. 11 may include a rack gear 363 (e.g., the rack gear 363 of FIG. 11) comprising only the second portion 3632 in contact with the conductive portion 510 (e.g., a first conductive portion 511). For example, the rack gear 363 of the electronic device 101 illustrated in FIG. 11 may be in contact with the first conductive portion 511. The rack gear 363 of the electronic device 101 illustrated in FIG. 11 may be electrically disconnected from the first substrate 530.

Referring to FIG. 13, the efficiency of the first antenna may vary in accordance with a structure of the rack gear 363. For example, in a frequency band equal to or less than approximately 1GHz, the first graph 1301 may have higher efficiency than the second graph 1302 and the third graph 1303. For example, in a frequency band of approximately 0.8GHz to approximately 0.9GHz, the first graph 1301 may have efficiency approximately 2dB to approximately 3dB higher than the second graph 1302 and the third graph 1303. For example, when a first signal transmitted and/or received through the first antenna is a signal on a low-band range, the electronic device 101 may include the rack gear 363 (e.g., the rack gear 363 of FIG. 9A) comprising the first portion 3631 electrically connected to the ground portion of the first substrate 530 and the second portion 3632 in contact with the conductive portion 510. Performance of the first antenna may be improved as the rack gear 363 comprising the first portion 3631 and the second portion 3632 provides a ground path for the first antenna.

For example, in a frequency band equal to or greater than approximately 1.5GHz, which is higher than a low-band range, the third graph 1303 may have higher efficiency than the first graph 1301 and the second graph 1302. For example, in a frequency band of approximately 1.9GHz to approximately 2GHz, the third graph 1303 may have efficiency approximately 3dB to approximately 5dB higher than the first graph 1301 and the second graph 1302. For example, when a first signal transmitted and/or received through the first antenna is a signal on a mid-band range, the electronic device 101 may include only a rack gear 363 (e.g., the rack gear 363 of FIG. 11) comprising the second portion 3632 in contact with the conductive portion 510. Communication performance of the first antenna for a signal on a relatively high frequency band may be improved as the rack gear 363 comprising only the second portion 3632 provides a path for radiation current for the first antenna.

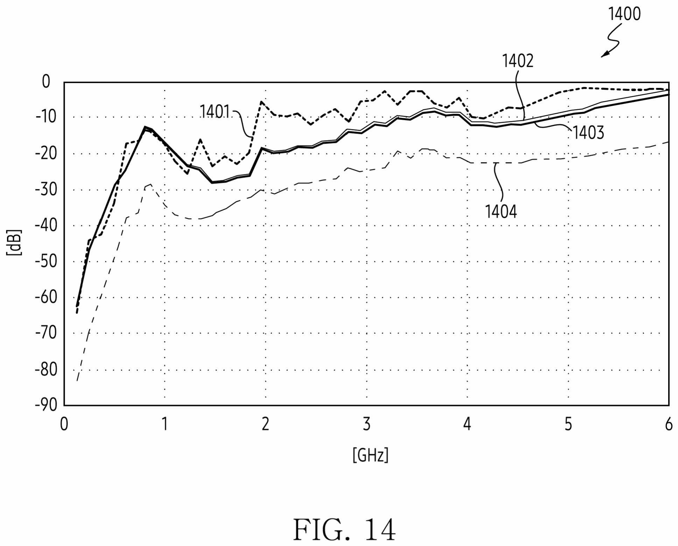

FIG. 14 is a graph indicating efficiency of a second antenna in a first state.

An x-axis of a graph 1400 is frequency (unit: GHz), and a y-axis of the graph 1400 is efficiency (unit: dB).

A first graph 1401 of FIG. 14 indicates efficiency of an antenna (e.g., the second antenna) including only the first conductive portion 511 of the electronic device 101 illustrated in FIG. 11. For example, the electronic device 101 illustrated in FIG. 11 may include a rack gear 363 comprising only a second portion 3632 in contact with a conductive portion 510. For example, the rack gear 363 of the electronic device 101 illustrated in FIG. 11 may be electrically connected to the first conductive portion 511 by contacting the first conductive portion 511. The rack gear 363 of the electronic device 101 illustrated in FIG. 11 may be electrically disconnected from a first substrate 530.

A second graph 1402 of FIG. 14 indicates efficiency of an antenna including only the first conductive portion 511 of the electronic device 101 illustrated in FIG. 12. For example, the electronic device 101 illustrated in FIG. 12 may include a rack gear 363 comprising a first portion 3631 electrically connected to a ground portion of the first substrate 530 and the second portion 3632 that may couple with the conductive portion 510 (e.g., the first conductive portion 511). For example, the rack gear 363 of the electronic device 101 illustrated in FIG. 12 may couple with the first conductive portion 511. For example, the rack gear 363 of the electronic device 101 illustrated in FIG. 12 may be grounded through the first substrate 530.

A third graph 1403 of FIG. 14 indicates efficiency of an antenna including only the first conductive portion 511 of the electronic device 101 illustrated in FIG. 7A. For example, the electronic device 101 illustrated in FIG. 7A may include a rack gear 363 comprising only the first portion 3631 electrically connected to the ground portion of the first substrate 530. For example, the rack gear 363 of the electronic device 101 illustrated in FIG. 7A may be spaced apart from the conductive portion 510 (e.g., the first conductive portion 511). The rack gear 363 of the electronic device 101 illustrated in FIG. 7A may be grounded through the first substrate 530.

A fourth graph 1404 of FIG. 14 illustrates efficiency of an antenna including only the first conductive portion 511 of the electronic device 101 illustrated in FIG. 9A. For example, the electronic device 101 illustrated in FIG. 9A may include a rack gear 363 comprising the first portion 3631 electrically connected to the ground portion of the first substrate 530 and the second portion 3632 in contact with the conductive portion 510 (e.g., the first conductive portion 511). The rack gear 363 of the electronic device 101 illustrated in FIG. 9A may be grounded through the first substrate 530.

Referring to FIG. 14, the efficiency of the second antenna may vary in accordance with a structure of the rack gear 363. For example, in a frequency band equal to or greater than approximately 1.2GHz, the first graph 1401 may have higher efficiency than the second graph 1402, the third graph 1403, and the fourth graph 1404. For example, when a signal transmitted and/or received through the second antenna is a signal on a frequency band equal to or greater than approximately 1GHz, the electronic device 101 may include the rack gear 363 (e.g., the rack gear 363 of FIG. 11) comprising only the second portion 3632 in contact with the first conductive portion 511. At least a portion of the rack gear 363 comprising only the second portion 3632 directly contacting the first conductive portion 511 may operate as a portion of an antenna radiator by providing a path through which radiation current flows. The efficiency of the second antenna may be improved by transmitting and/or receiving the second signal using an electromagnetic field formed by the radiation current flowing along the first conductive portion 511 and a portion of the rack gear 363.

Referring to FIGS. 13 and 14, the performance of the first antenna and the performance of the second antenna may vary as a structure of the rack gear 363 is changed. In accordance with a type of the electronic device 101, the electronic device 101 may communicate with an external electronic device using signals on various frequency bands. By designing a structure of the rack gear 363 based on a designated frequency characteristic of a signal to be transmitted and/or received through the first antenna and the second antenna, communication performance of the electronic device 101 may be improved. Various embodiments may be possible according to the purpose of the electronic device 101 through a combination of various structures of the rack gear 363 disclosed in the document.

An electronic device (e.g., the electronic device 101 of FIG. 5A) is provided. The electronic device may comprise a housing (e.g., the housing 201 of FIG. 5A), a rack gear (e.g., the rack gear 363 of FIG. 5A), a conductive portion (e.g., the conductive portion 510 of FIG. 5A), wireless communication circuitry (e.g., the wireless communication module 192 of FIG. 1), and a first substrate (e.g., the first substrate 530 of FIG. 5A). The housing may include a first housing part (e.g., the first housing part 210 of FIG. 5A) and a second housing part (e.g., the second housing part 220 of FIG. 5A) movably coupled to each other. The rack gear may be parallel to a moving direction (e.g., the first direction 261 and the second direction 262 of FIG. 5A) of the first housing part or the second housing part. The rack gear may be disposed in the housing. The conductive portion may be formed along a portion of at least one lateral side (e.g., the at least one lateral side 501 of FIG. 5A) of the second housing part. The wireless communication circuitry may be configured to communicate with an external electronic device using the conductive portion. The first substrate may be electrically connected to the conductive portion. At least a portion of the conductive portion, in the at least one lateral side, may face the rack gear. At least a portion of the conductive portion may be disposed at a position corresponding to a first state in which a distance between the rack gear and the conductive portion is minimum or a position corresponding to a second state in which the distance is maximum, in accordance with the movement of the first housing part or the second housing part. The rack gear may include at least one of a first portion (e.g., the first portion 3631 of FIG. 7A) or a second portion (e.g., the second portion 3632 of FIG. 9A). The first portion may be electrically connected to a ground portion of the first substrate in the first state. The second portion may be in contact with the conductive portion in the first state. For example, in the first state, to reduce performance degradation of an antenna by the rack gear adjacent to the conductive portion, the rack gear may be grounded through the first portion and the first substrate. As the rack gear is grounded, interference with the conductive portion may be reduced, such that degradation of communication performance of the electronic device may be reduced. For example, in the first state, the rack gear may be in contact with the conductive portion through the second portion.

The electronic device may comprise a motor (e.g., the motor 361 of FIG. 5A) and a pinion gear (e.g., the pinion gear 362 of FIG. 5A). The pinion gear may be engaged with the rack gear. The pinion gear may be configured to move the rack gear by being rotated based on a driving force provided from the motor. For example, the rack gear may be configured to move in a state of being coupled with the first housing part when moved by the driving force. A portion of the rack gear including at least one of the first portion or the second portion may be moved closer to the at least one lateral side including the conductive portion when the electronic device is changed from the second state, in which a size of the housing is maximum, to the first state. The portion of the rack gear may be moved away from the at least one lateral side when the electronic device is changed from the first state to the second state. For example, the rack gear may be coupled with the first housing part. As the pinion gear rotates, the rack gear may be moved in the first direction or the second direction in a state of being coupled with the first housing part. By moving the rack gear, the electronic device may comprise a housing having a slidable or rollable structure.

For example, the rack gear may be grounded, in the first state, through the first portion electrically connected to the ground portion. For example, the rack gear may be grounded through the first portion electrically connected to the ground portion of the first substrate. As the rack gear is grounded, electromagnetic interaction between the rack gear and an antenna radiator may be reduced. For example, as the rack gear is grounded, interference by the rack gear with a signal transmitted and/or received through the antenna radiator may be reduced.

For example, the rack gear may provide a ground path for an antenna including the conductive portion, in the first state, through the first portion and the second portion in contact with the conductive portion. By the grounded rack gear contacting the conductive portion, the rack gear may provide the ground path for the antenna. Radiation current flowing along the conductive portion may flow to ground through the rack gear. As the ground path of the antenna is added, performance of the antenna may be improved. For example, noise received or reflected by the conductive portion operating as an antenna radiator may flow to the ground through the ground path provided by the rack gear, thereby reducing antenna performance degradation due to noise.

For example, the rack gear may provide a path for radiation current for an antenna including the conductive portion, in the first state, through the second portion in contact with the conductive portion.

For example, the first portion may be electrically disconnected from the ground portion. For example, the rack gear may be in contact with the conductive portion in an ungrounded state. For example, the first portion may be electrically disconnected from the ground portion, and the second portion may be in contact with the conductive portion. For example, when a feeding signal is provided to a feeding point of the conductive portion, radiation current may be formed along the conductive portion. In a case in which an electrical path in which the radiation current may be formed is too short, radiation efficiency of the antenna may deteriorate. The rack gear may provide a path for the radiation current of the antenna by directly contacting the conductive portion in an ungrounded state. For example, the radiation current may flow along a portion of the rack gear. As an electrical path for the radiation current is secured, the efficiency of the antenna may be improved.

For example, the at least one lateral side may include a first lateral side (e.g., the first lateral side 220a of FIG. 6A) and a second lateral side (e.g., the second lateral side 220b of FIG. 6A). The first lateral side may face the first housing part. The first lateral side may include a slit (e.g., the slit 523 of FIG. 6A). The second lateral side may be perpendicular to the first lateral side. The conductive portion may be formed between a first non-conductive portion (e.g., the first non-conductive portion 521 of FIG. 6A) in the first lateral side in contact with a portion of the slit and a second non-conductive portion (e.g., the second non-conductive portion 522 of FIG. 6A) in the second lateral side. The conductive portion may include a first conductive portion (e.g., the first conductive portion 511 of FIG. 6A) and a second conductive portion (e.g., the second conductive portion 512 of FIG. 6B). The first conductive portion may be in contact with the first non-conductive portion and the slit. The second conductive portion may be distinct from the first conductive portion. For example, the electronic device may include a plurality of antennas to transmit and/or receive signals on different frequency bands. For example, the electronic device may include a first antenna including the conductive portion and a second antenna using the first conductive portion as a main radiator. For example, the second antenna may be referred to as a slit antenna.

For example, the wireless communication circuitry may be configured to transmit or receive a first signal on a first frequency band using the conductive portion. The wireless communication circuitry may be configured to transmit or receive a second signal on a second frequency band different from the first frequency band using the first conductive portion that is a portion of the conductive portion.

For example, the second frequency band may be higher than the first frequency band. For example, the first antenna and the second antenna may transmit and/or receive signals on different frequency bands. For example, since the first conductive portion is included in a partial area of the conductive portion, a length of the conductive portion may be longer than a length of the first conductive portion. Since the length of the conductive portion is longer than the length of the first conductive portion, the first frequency band may be lower than the second frequency band.

The electronic device may further comprise a conductive connecting member (e.g., the conductive connecting member 560 of FIG. 7A) electrically connecting the first portion and the ground portion by contacting the first portion and the ground portion. For example, the conductive connecting member may electrically connect the first portion and the ground portion by contacting each of the first portion and the ground portion of the first substrate. For example, the conductive connecting member may include a c-clip, a conductive tape, a conductive poron, a screw, and a spring pin, but is not limited thereto. The rack gear may be grounded by being electrically connected to the ground portion of the first substrate through the conductive connecting member. As the rack gear is grounded, degradation of communication performance of the electronic device may be reduced.

For example, the first portion may include a chamfer portion (e.g., the chamfer portion 3633 of FIG. 7B). For example, when the electronic device is changed from the second state to the first state, the rack gear may contact the conductive connecting member. Since the rack gear is moved in the first direction while maintaining contact with the conductive connecting member, friction may occur between the conductive connecting member and another side before the first portion and the conductive connecting member come into contact. Due to the friction, damage to the conductive connecting member and/or the rack gear may occur, or unstable grounding of the rack gear may be caused. The rack gear may reduce the damage and may provide stable grounding by including the chamfer portion. When the electronic device is changed from the second state to the first state, the chamfer portion of the rack gear may first come into contact with the conductive connecting member. The conductive connecting member may contact the first portion by sliding along an inclined surface formed by the chamfer portion. The contact between the first portion of the rack gear and the conductive connecting member may be made smoothly by the chamfer portion.

For example, the second portion may include at least one protrusion (e.g., the at least one protrusion 571 of FIG. 9B) in contact with the conductive portion, in the first state.

For example, the second portion may include an elastic structure (e.g., the elastic structure 572 of FIG. 9C) in contact with the conductive portion, in the first state. For example, the second portion of the rack gear in contact with the conductive portion may be implemented in various forms.

The electronic device may further comprise a second substrate (e.g., the second substrate 540 of FIG. 5C) and a third substrate (e.g., the third substrate 550 of FIG. 5C). The second substrate may be disposed in the second housing part and may be electrically connected to the first substrate. The third substrate may be disposed at the first housing part and may be electrically connected to the second substrate. For example, since the housing includes the first housing part and the second housing part movably coupled to each other, electrical connection between electronic components in the first housing part and electronic components in the second housing part may be required. The electronic components in the first housing part may be electrically connected to the second substrate. The electronic components in the second housing part may be electrically connected to the third substrate. As the second substrate and the third substrate are electrically connected, the electronic components in the first housing part and the electronic components in the second housing part may be electrically connected. As electrical connection between a plurality of electronic components is enabled through the second substrate and the third substrate, various functions of the electronic device including the housing with a slidable structure may be implemented.

The electronic device may further comprise a display (e.g., the display 230 of FIG. 5C). The display may include a first display area (e.g., the first display area 530a of FIG. 5C) and a second display area (e.g., the second display area 530b of FIG. 5C). The first display area may be configured to bend at least partially into the inside of the first housing part based on the movement of the first housing part or the second housing part. At least a portion of the second display area may be rolled into the inside of the first housing part in the first state. At least a portion of the second display area may be drawn out from the inside of the first housing part to the outside of the first housing part in the second state, in which the size of the housing is maximum. For example, a size of the display area of the display may be changed. To change the size of the display area of the display, at least a portion of the second display area may be rolled into the inside of the first housing part in the first state. Since the size of the housing and the size of the display are of the display may be changed, the electronic device may provide various user experiences.

An electronic device (e.g., the electronic device 101 of FIG. 5A) is provided. The electronic device may comprise a housing (e.g., the housing 201 of FIG. 5A), a rack gear (e.g., the rack gear 363 of FIG. 5A), a conductive portion (e.g., the conductive portion 510 of FIG. 5A), wireless communication circuitry (e.g., the wireless communication module 192 of FIG. 1), and a first substrate (e.g., the first substrate 530 of FIG. 5A). The housing may include a first housing part (e.g., the first housing part 210 of FIG. 5A) and a second housing part (e.g., the second housing part 220 of FIG. 5A) movably coupled to each other. The rack gear may be parallel to a moving direction (e.g., the first direction 261 and the second direction 262 of FIG. 5A) of the first housing part or the second housing part. The rack gear may be disposed in the housing. The conductive portion may be formed along a portion of at least one lateral side (e.g., the at least one lateral side 501 of FIG. 5A) of the second housing part. The wireless communication circuitry may be configured to communicate with an external electronic device using the conductive portion. The first substrate may be electrically connected to the conductive portion. At least a portion of the conductive portion, in the at least one lateral side, may face the rack gear. At least a portion of the conductive portion may be disposed at a position corresponding to a first state of the electronic device in which a distance between the rack gear and the conductive portion is minimum or a position corresponding to a second state of the electronic device in which the distance is maximum, in accordance with the movement of the first housing part or the second housing part. The rack gear may include a first portion (e.g., the first portion 3631 of FIG. 7A) and a second portion (e.g., the second portion 3632 of FIG. 12). The first portion may be electrically connected to a ground portion of the first substrate in the first state. The second portion may be spaced apart from the conductive portion in the first state for coupling with the conductive portion.

For example, the rack gear may be grounded, in the first state, through the first portion electrically connected to the ground portion.

For example, the rack gear may provide a ground path for an antenna including the conductive portion, in the first state, through the first portion and the second portion that couples with the conductive portion. For example, radiation current formed in the conductive portion may be formed in a portion of the rack gear by coupling with the rack gear. The radiation current may flow to the ground portion of the first substrate through the grounded rack gear. As the ground path is added, efficiency of the antenna may be improved.

For example, the rack gear may provide a ground path for an antenna including the conductive portion, in the first state, through the first portion and the second portion.

The electronic device may include a motor (e.g., the motor 361 of FIG. 5A) and a pinion gear (e.g., the pinion gear 362 of FIG. 5A). The pinion gear may be engaged with the rack gear. The pinion gear may be configured to move the rack gear by being rotated based on a driving force provided from the motor.

For example, the at least one lateral side of the second housing part may include a first lateral side (e.g., the first lateral side 220a of FIG. 6A) and a second lateral side (e.g., the second lateral side 220b of FIG. 6A). The first lateral side may face the first housing part among the sides of the second housing part. The first lateral side may include a slit (e.g., the slit 523 of FIG. 6A). The second lateral side may be perpendicular to the first lateral side. The conductive portion may be formed between a first non-conductive portion (e.g., the first non-conductive portion 521 of FIG. 6A) in the first lateral side in contact with a portion of the slit and a second non-conductive portion (e.g., the second non-conductive portion 522 of FIG. 6A) in the second lateral side. The conductive portion may include a first conductive portion (e.g., the first conductive portion 511 of FIG. 6A) and a second conductive portion (e.g., the second conductive portion 512 of FIG. 6A). The first conductive portion may be in contact with the first non-conductive portion and the slit. The second conductive portion may be distinct from the first conductive portion. The wireless communication circuitry may be configured to transmit and/or receive a first signal on a first frequency band using the conductive portion. The wireless communication circuitry may be configured to transmit and/or receive a second signal on a second frequency band different from the first frequency band using the first conductive portion that is a portion of the conductive portion.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a housing (201) including a first housing part (210) and a second housing part (220) movably coupled to each other;
a rack gear (363) disposed in the housing and parallel to a moving direction of the first housing part or the second housing part;
a conductive portion (510) formed along a portion of at least one lateral side of the second housing part;
wireless communication circuitry (192) configured to communicate with an external electronic device using the conductive portion; and
a first substrate (530) electrically connected to the conductive portion,
wherein at least a portion of the conductive portion faces the rack gear, and, in accordance with the movement of the first housing part or the second housing part, is positioned at:
a position corresponding to a first state of the electronic device in which a distance between the rack gear and the conductive portion is minimum, or
a position corresponding to a second state of the electronic device in which the distance is maximum, and
wherein the rack gear (363) includes at least one of a first portion electrically connected to a ground portion of the first substrate in the first state or a second portion in contact with the conductive portion in the first state.

2. The electronic device of claim 1, further comprising:
a motor (361), and
a pinion gear (362), engaged with the rack gear, configured to move the rack gear by being rotated based on a driving force provided from the motor.

3. The electronic device of any one of claim 1 or 2,
wherein the rack gear is grounded, in the first state, through the first portion electrically connected to the ground portion.

4. The electronic device of any of claims 1 to 3,
wherein the rack gear is configured to provide a ground path for an antenna including the conductive portion, in the first state, through the first portion and the second portion in contact with the conductive portion.

5. The electronic device of any one of claims 1 to 4,
wherein the rack gear is configured to provide a path for radiation current for an antenna including the conductive portion, in the first state, through the second portion in contact with the conductive portion.

6. The electronic device of any one of claims 1 to 5,
wherein the first portion is electrically disconnected from the ground portion.

7. The electronic device of any one of claims 1 to 6,
wherein the at least one lateral side includes:
a first lateral side facing the first housing part and including a slit (523), and
a second lateral side perpendicular to the first lateral side,
wherein the conductive portion is formed between a first non-conductive portion (521) in the first lateral side in contact with a portion of the slit and a second non-conductive portion (522) in the second lateral side, and
wherein the conductive portion (510) includes:
a first conductive portion (511) in contact with the first non-conductive portion and the slit, and
a second conductive portion (512) distinct from the first conductive portion.

8. The electronic device of claim 7,
wherein the wireless communication circuitry is configured to:
transmit or receive a first signal on a first frequency band using the conductive portion, and
transmit or receive a second signal on a second frequency band different from the first frequency band using the first conductive portion that is a portion of the conductive portion.

9. The electronic device of claim 8,
wherein the second frequency band is higher than the first frequency band.

10. The electronic device of any one of claims 1 to 9, further comprising a conductive connecting member (560) electrically connecting the first portion and the ground portion by contacting the first portion and the ground portion.

11. The electronic device of any one of claims 1 to 10,
wherein the first portion includes a chamfer portion (3633).

12. The electronic device of any one of claims 1 to 11,
wherein the second portion includes at least one protrusion (571) in contact with the conductive portion, in the first state.

13. The electronic device of any one of claims 1 to 12,
wherein the second portion includes an elastic structure (572) in contact with the conductive portion, in the first state.

14. The electronic device of any one of claims 1 to 13, further comprising:
a second substrate (540) disposed in the second housing part and electrically connected to the first substrate; and
a third substrate (550) disposed at the first housing part and electrically connected to the second substrate.

15. The electronic device of any one of claims 1 to 14, further comprising a display (230), the display including:
a first display area, and
a second display area configured to bend at least partially into the inside of the first housing part based on the movement of the first housing part or the second housing part,
wherein at least a portion of the second display area is rolled into the inside of the first housing part in the first state, and is drawn out from the inside of the first housing part to the outside of the first housing part in the second state.

## Patentansprüche

1. Elektronische Vorrichtung, umfassend:
ein Gehäuse (201), das ein erstes Gehäuseteil (210) und ein zweites Gehäuseteil (220) beinhaltet, die beweglich miteinander gekoppelt sind;
eine Zahnstange (363), die in dem Gehäuse und parallel zu einer Bewegungsrichtung des ersten Gehäuseteils oder des zweiten Gehäuseteils angeordnet ist;
einen leitfähigen Abschnitt (510), der entlang eines Abschnitts mindestens einer lateralen Seite des zweiten Gehäuseteils ausgebildet ist;
eine Drahtloskommunikationsschaltung (192), die dazu konfiguriert ist, unter Verwendung des leitfähigen Abschnitts mit einer externen elektronischen Vorrichtung zu kommunizieren; und
ein erstes Substrat (530), das elektrisch mit dem leitfähigen Abschnitt verbunden ist,
wobei mindestens ein Abschnitt des leitfähigen Abschnitts der Zahnstange zugewandt ist und gemäß der Bewegung des ersten Gehäuseteils oder des zweiten Gehäuseteils positioniert ist an:
einer Position, die einem ersten Zustand der elektronischen Vorrichtung entspricht, in dem ein Abstand zwischen der Zahnstange und dem leitfähigen Abschnitt minimal ist, oder
einer Position, die einem zweiten Zustand der elektronischen Vorrichtung entspricht, in dem der Abstand maximal ist, und
wobei die Zahnstange (363) mindestens eines von einem ersten Abschnitt, der in dem ersten Zustand elektrisch mit einem Masseabschnitt des ersten Substrats verbunden ist, oder einem zweiten Abschnitt, der in dem ersten Zustand mit dem leitfähigen Abschnitt in Kontakt steht, umfasst.

2. Elektronische Vorrichtung nach Anspruch 1, ferner umfassend:
einen Motor (361); und
ein Ritzel (362), das mit der Zahnstange in Eingriff steht und dazu konfiguriert ist, die Zahnstange zu bewegen, indem es basierend auf einer von dem Motor bereitgestellten Antriebskraft gedreht wird.

3. Elektronische Vorrichtung nach einem der Ansprüche 1 oder 2,
wobei die Zahnstange in dem ersten Zustand über den ersten Abschnitt, der elektrisch mit dem Masseabschnitt verbunden ist, geerdet ist.

4. Elektronische Vorrichtung nach einem der Ansprüche 1 bis 3,
wobei die Zahnstange dazu konfiguriert ist, in dem ersten Zustand über den ersten Abschnitt und den zweiten Abschnitt, der mit dem leitfähigen Abschnitt in Kontakt steht, einen Massepfad für eine Antenne bereitzustellen, die den leitfähigen Abschnitt beinhaltet.

5. Elektronische Vorrichtung nach einem der Ansprüche 1 bis 4,
wobei die Zahnstange dazu konfiguriert ist, in dem ersten Zustand über den zweiten Abschnitt, der mit dem leitfähigen Abschnitt in Kontakt steht, einen Pfad für Strahlungsstrom für eine Antenne bereitzustellen, die den leitfähigen Abschnitt beinhaltet.

6. Elektronische Vorrichtung nach einem der Ansprüche 1 bis 5,
wobei der erste Abschnitt elektrisch von dem Masseabschnitt getrennt ist.

7. Elektronische Vorrichtung nach einem der Ansprüche 1 bis 6,
wobei die mindestens eine laterale Seite umfasst:
eine erste laterale Seite, die dem ersten Gehäuseteil zugewandt ist und einen Schlitz (523) beinhaltet, und
eine zweite laterale Seite, die senkrecht zu der ersten lateralen Seite ist,
wobei der leitfähige Abschnitt zwischen einem ersten nichtleitenden Abschnitt (521) in der ersten lateralen Seite, der mit einem Abschnitt des Schlitzes in Kontakt steht, und einem zweiten nichtleitenden Abschnitt (522) in der zweiten lateralen Seite ausgebildet ist, und
wobei der leitfähige Abschnitt (510) umfasst:
einen ersten leitfähigen Abschnitt (511), der mit dem ersten nichtleitenden Abschnitt und dem Schlitz in Kontakt steht, und
einen zweiten leitfähigen Abschnitt (512), der sich von dem ersten leitfähigen Abschnitt unterscheidet.

8. Elektronische Vorrichtung nach Anspruch 7,
wobei die Drahtloskommunikationsschaltung dazu konfiguriert ist:
unter Verwendung des leitfähigen Abschnitts ein erstes Signal in einem ersten Frequenzband zu senden oder zu empfangen, und
unter Verwendung des ersten leitfähigen Abschnitts, der ein Abschnitt des leitfähigen Abschnitts ist, ein zweites Signal in einem zweiten Frequenzband, das sich von dem ersten Frequenzband unterscheidet, zu senden oder zu empfangen.

9. Elektronische Vorrichtung nach Anspruch 8,
wobei das zweite Frequenzband höher als das erste Frequenzband ist.

10. Elektronische Vorrichtung nach einem der Ansprüche 1 bis 9, ferner umfassend ein leitfähiges Verbindungselement (560), das den ersten Abschnitt und den Masseabschnitt elektrisch verbindet, indem es mit dem ersten Abschnitt und dem Masseabschnitt in Kontakt kommt.

11. Elektronische Vorrichtung nach einem der Ansprüche 1 bis 10,
wobei der erste Abschnitt einen Fasenabschnitt (3633) beinhaltet.

12. Elektronische Vorrichtung nach einem der Ansprüche 1 bis 11,
wobei der zweite Abschnitt (571) mindestens einen Vorsprung beinhaltet, der in dem ersten Zustand mit dem leitfähigen Abschnitt in Kontakt steht.

13. Elektronische Vorrichtung nach einem der Ansprüche 1 bis 12,
wobei der zweite Abschnitt eine elastische Struktur (572) beinhaltet, die in dem ersten Zustand mit dem leitfähigen Abschnitt in Kontakt steht.

14. Elektronische Vorrichtung nach einem der Ansprüche 1 bis 13, ferner umfassend:
ein zweites Substrat (540), das in dem zweiten Gehäuseteil angeordnet und elektrisch mit dem ersten Substrat verbunden ist; und
ein drittes Substrat (550), das an dem ersten Gehäuseteil angeordnet und elektrisch mit dem zweiten Substrat verbunden ist.

15. Elektronische Vorrichtung nach einem der Ansprüche 1 bis 14, ferner umfassend eine Anzeige (230), wobei die Anzeige umfasst:
einen ersten Anzeigebereich und
einen zweiten Anzeigebereich, der dazu konfiguriert ist, sich basierend auf der Bewegung des ersten Gehäuseteils oder des zweiten Gehäuseteils mindestens teilweise in das Innere des ersten Gehäuseteils zu biegen,
wobei mindestens ein Abschnitt des zweiten Anzeigebereichs in dem ersten Zustand in das Innere des ersten Gehäuseteils eingerollt ist und in dem zweiten Zustand aus dem Inneren des ersten Gehäuseteils zur Außenseite des ersten Gehäuseteils herausgezogen ist.

## Revendications

1. Dispositif électronique, comprenant :
un boîtier (201) comprenant une première partie de boîtier (210) et une deuxième partie de boîtier (220) couplées de manière mobile l'une à l'autre ;
un engrenage à crémaillère (363) disposé dans le boîtier et parallèle à une direction de déplacement de la première partie de boîtier ou de la deuxième partie de boîtier ;
une partie conductrice (510) formée le long d'une partie d'au moins un côté latéral de la deuxième partie de boîtier ;
un circuit de communication sans fil (192) configuré pour communiquer avec un dispositif électronique externe à l'aide de la partie conductrice ; et
un premier substrat (530) connecté électriquement à la partie conductrice,
dans lequel au moins une partie de la partie conductrice fait face à l'engrenage à crémaillère et, conformément au déplacement de la première partie de boîtier ou de la deuxième partie de boîtier, est positionnée :
à une position correspondant à un premier état du dispositif électronique dans lequel une distance entre l'engrenage à crémaillère et la partie conductrice est minimale, ou
à une position correspondant à un deuxième état du dispositif électronique dans lequel la distance est maximale, et
dans lequel l'engrenage à crémaillère (363) comprend au moins l'une d'une première partie connectée électriquement à une partie de masse du premier substrat dans le premier état ou d'une deuxième partie en contact avec la partie conductrice dans le premier état.

2. Dispositif électronique de la revendication 1, comprenant en outre :
un moteur (361) ; et
un pignon (362), en prise avec l'engrenage à crémaillère, configuré pour déplacer l'engrenage à crémaillère en étant tourné sur la base d'une force d'entraînement fournie par le moteur.

3. Dispositif électronique de l'une quelconque des revendications 1 ou 2,
dans lequel l'engrenage à crémaillère est mis à la terre, dans le premier état, par l'intermédiaire de la première partie connectée électriquement à la partie de masse.

4. Dispositif électronique de l'une quelconque des revendications 1 à 3,
dans lequel l'engrenage à crémaillère est configuré pour fournir un chemin de masse pour une antenne comprenant la partie conductrice, dans le premier état, par l'intermédiaire de la première partie et de la deuxième partie en contact avec la partie conductrice.

5. Dispositif électronique de l'une quelconque des revendications 1 à 4,
dans lequel l'engrenage à crémaillère est configuré pour fournir un chemin pour un courant de rayonnement pour une antenne comprenant la partie conductrice, dans le premier état, par l'intermédiaire de la deuxième partie en contact avec la partie conductrice.

6. Dispositif électronique de l'une quelconque des revendications 1 à 5,
dans lequel la première partie est déconnectée électriquement de la partie de masse.

7. Dispositif électronique de l'une quelconque des revendications 1 à 6,
dans lequel l'au moins un côté latéral comprend :
un premier côté latéral faisant face à la première partie de boîtier et comprenant une fente (523), et
un deuxième côté latéral perpendiculaire au premier côté latéral,
dans lequel la partie conductrice est formée entre une première partie non conductrice (521) dans le premier côté latéral en contact avec une partie de la fente et une deuxième partie non conductrice (522) dans le deuxième côté latéral, et
dans lequel la partie conductrice (510) comprend :
une première partie conductrice (511) en contact avec la première partie non conductrice et la fente, et
une deuxième partie conductrice (512) distincte de la première partie conductrice.

8. Dispositif électronique de la revendication 7,
dans lequel le circuit de communication sans fil est configuré pour :
transmettre ou recevoir un premier signal sur une première bande de fréquences à l'aide de la partie conductrice, et
transmettre ou recevoir un deuxième signal sur une deuxième bande de fréquences différente de la première bande de fréquences en utilisant la première partie conductrice qui est une partie de la partie conductrice.

9. Dispositif électronique de la revendication 8,
dans lequel la deuxième bande de fréquences est plus élevée que la première bande de fréquences.

10. Dispositif électronique de l'une quelconque des revendications 1 à 9, comprenant en outre un élément de connexion conducteur (560) connectant électriquement la première partie et la partie de masse en étant en contact avec la première partie et la partie de masse.

11. Dispositif électronique de l'une quelconque des revendications 1 à 10,
dans lequel la première partie comprend une partie chanfreinée (3633).

12. Dispositif électronique de l'une quelconque des revendications 1 à 11,
dans lequel la deuxième partie (571) comprend au moins une saillie en contact avec la partie conductrice, dans le premier état.

13. Dispositif électronique de l'une quelconque des revendications 1 à 12,
dans lequel la deuxième partie comprend une structure élastique (572) en contact avec la partie conductrice, dans le premier état.

14. Dispositif électronique de l'une quelconque des revendications 1 à 13, comprenant en outre :
un deuxième substrat (540) disposé dans la deuxième partie de boîtier et connecté électriquement au premier substrat ; et
un troisième substrat (550) disposé au niveau de la première partie de boîtier et connecté électriquement au deuxième substrat.

15. Dispositif électronique de l'une quelconque des revendications 1 à 14, comprenant en outre un affichage (230), l'affichage comprenant :
une première zone d'affichage, et
une deuxième zone d'affichage configurée pour se courber au moins partiellement vers l'intérieur de la première partie de boîtier sur la base du déplacement de la première partie de boîtier ou de la deuxième partie de boîtier,
dans lequel au moins une partie de la deuxième zone d'affichage est enroulée à l'intérieur de la première partie de boîtier dans le premier état, et est extraite de l'intérieur de la première partie de boîtier vers l'extérieur de la première partie de boîtier dans le deuxième état.
